# EUROPÄISCHE PATENTSCHRIFT

(11) **EP 2 714 309 B1**
(45) Veröffentlichungstag und Bekanntmachung des Hinweises auf die Patenterteilung: **18.01.2017**
(21) Anmeldenummer: 12722726.2
(22) Anmeldetag: 18.05.2012
(51) Int. Cl.: B23B 3/16, B23B 3/30, B23Q 39/00, B23Q 39/02

(54) **WERKZEUGMASCHINE**
MACHINE TOOL
MACHINE-OUTIL

(30) Priorität: 31.05.2011 DE 102011076834; 31.05.2011 DE 102011076835; 15.06.2011 DE 102011077571
(43) Veröffentlichungstag der Anmeldung: 09.04.2014
(73) Patentinhaber: Gildemeister Italiana S.p.A., 24030 Brembate di Sopra (BG) (IT)
(72) Erfinder: WALZ, Jürgen, 72636 Frickenhausen (DE); RIGOLONE, Franco, I-24010 Ponteranica (BG) (IT); DEURINGER, Gottfried, 82538 Geretsried (DE); ROTA, Renato, I-24030 Carvico (BG) (IT); GERST, Manuel, 33619 Bielefeld (DE)
(74) Vertreter: MERH-IP Matias Erny Reichl Hoffmann Patentanwälte PartG mbB
(86) Internationale Anmeldenummer: PCT/EP2012/059292
(87) Internationale Veröffentlichungsnummer: WO 2012/163701

(56) Entgegenhaltungen:
- EP-A1- 0 999 002
- EP-A1- 1 897 640
- EP-A1- 2 058 071
- DE-A1-102006 015 078
- US-A- 5 127 140

## Beschreibung

Die vorliegende Erfindung betrifft eine Werkzeugmaschine, insbesondere Drehmaschine, mit einem Maschinengestell, einem an dem Maschinengestell angeordneten ersten Spindelträger, der eine erste Arbeitsspindel zur Aufnahme eines ersten Werkstücks hält, einem an dem Maschinengestell angeordneten ersten Werkzeugträgerschlitten, auf dem ein erster Werkzeugträger für Werkzeuge zur Bearbeitung des ersten Werkstücks an der ersten Arbeitsspindel angeordnet ist, einem an dem Maschinengestell angeordneten zweiten Spindelträger, der eine der ersten Arbeitsspindel zugewandte zweite Arbeitsspindel zur Aufnahme eines zweiten Werkstücks hält, wobei die Spindelachse der zweiten Arbeitsspindel parallel, insbesondere koaxial, zu der Spindelachse der ersten Arbeitsspindel ausgerichtet ist, und einem an dem Maschinengestell angeordneten zweiten Werkzeugträgerschlitten, auf dem ein zweiter Werkzeugträger für Werkzeuge zur Bearbeitung des zweiten Werkstücks an der zweiten Arbeitsspindel angeordnet ist.

### Hintergrund der Erfindung

Gattungsgemäße Werkzeugmaschinen umfassen ein Maschinengestell, an dem zumindest zwei zueinander zugewandte, drehbar gelagerte Arbeitsspindeln mit parallelen bzw. koaxialen Spindelachsen vorgesehen sind, wobei an den Arbeitsspindeln jeweils Werkstücke zur Bearbeitung an der Werkzeugmaschine aufgenommen werden können. Für die Bereitstellung der Werkzeuge zur Bearbeitung werden Werkzeugträger vorgesehen, die zumeist auf an dem Maschinengestell angeordneten, verfahrbaren Werkzeugträgerschlitten, insbesondere Kreuzschlitten, bereitgestellt sind und mittels einer oder mehrerer Linearachsen relativ zu den Arbeitsspindeln verfahren werden können (z.B. in X-, Y- oder Z-Richtung verfahrbar). Derartige gattungsgemäße Werkzeugmaschinen sind z.B. aus der DD 279 429 A1 oder auch der EP 0 999 002 A1 bekannt.

Generell besteht bei derartigen gattungsgemäßen Werkzeugmaschinen die Anforderung, die Werkzeugmaschine derart bereitzustellen, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger jedoch steifer Bauweise der Werkzeugmaschine und mit für den Bearbeiter bzw. Bediener der Werkzeugmaschine möglichst gut einsehbarem Bearbeitungsraum.

Der Erfindung liegt somit die Aufgabe zugrunde, eine Werkzeugmaschine der gattungsgemäßen Art derart zu verbessern, dass eine effizientere Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger jedoch steifer Bauweise der Werkzeugmaschine und mit für den Bearbeiter bzw. Bediener der Werkzeugmaschine möglichst gut einsehbarem Bearbeitungsraum.

US 5,127,140 betrifft eine numerisch gesteuerte Drehmaschine mit zwei Spindeln und drei Werkzeughaltern, wobei zwei Spindelstöcke sich gegenüberliegend angeordnet sind, und wobei jeder der Werkzeughalter in zwei Richtungen verfahrbar ist.

EP 1897 640 A1 betrifft eine numerisch gesteuerte Drehmaschine mit zwei Spindeln und drei als Revolverkopf ausgebildeten Werkzeughaltern, wobei zwei Spindelstöcke sich gegenüberliegend angeordnet sind.

DE 10 2006 015 078 A1 betrifft eine zusammengesetzte Drehmaschine umfassend ein Bett; einen ersten und einen zweiten Spindelstock, angeordnet auf dem Bett, um einander zugewandt zu sein und miteinander koaxial zu sein; eine Werkzeugstütze, angeordnet zwischen dem ersten Spindelstock und dem zweiten Spindelstock, um in Richtung einer X-Achse (aufwärts/abwärts) bewegbar zu sein; und eine dritte Spindel, angeordnet auf dem Bett, um in Richtung der X-Achse, einer Richtung einer Y-Achse (vorwärts/rückwärts) und einer Richtung einer Z-Achse (links/rechts) bewegbar zu sein, wobei eine XY-Lagerungsebene, die parallel zu der X-Achse und Y-Achse ist, und durch die die Werkzeugstütze gelagert ist, um in Richtung der X-Achse bewegbar zu sein, sich mit einer XZ-Lagerungsebene schneidet, die parallel zu der X-Achse und Z-Achse verläuft, und durch die die dritte Spindel gelagert wird, um in Richtung der X-Achse bewegbar zu sein, und wobei eine Bewegungsachse in Richtung der X-Achse der Werkzeugstütze getrennt in der Richtung der Y-Achse von der XZ-Lagerungsebene festgelegt ist, und eine Bewegungsachse der dritten Spindel in Richtung der X-Achse getrennt in Richtung der Z-Achse von der XY-Lagerungsebene festgelegt ist.

EP 2 058 071 A1 betrifft einen Werkzeugrevolver, der um eine Achse drehbar ist und an dem an den äußeren Umfangsflächen eine Vielzahl von Werkzeugen radial angebracht sind.

### Zusammenfassung der Erfindung

Zur Lösung der vorstehend genannten Aufgabe wird gemäß der vorliegenden Erfindung eine Werkzeugmaschine gemäß dem unabhängigen Anspruch 1 vorgeschlagen. Abhängige Ansprüche betreffen bevorzugte Ausgestaltungen der Werkzeugmaschine gemäß der vorliegenden Erfindung.

Hierbei liegt der Erfindung insbesondere die Idee zugrunde, an einer Doppelspindel-Werkzeugmaschine mit aufeinander zugewandten Arbeitsspindeln neben einem oder mehreren neben den Spindeln angeordneten Werkzeugträgerschlitteneinheiten einen zwischen den Spindelträgern angeordneten und in Richtung parallel zu den Spindelachsen verfahrbaren mittleren Werkzeugträger mit einer Drehachse quer zu den Spindelachsen bereitzustellen, an dem ein flexibel einsetzbarer Werkzeugrevolver vorgesehen ist, wobei der zwischen den Spindelträgern angeordnete Werkzeugträger mittels der rotatorisch steuerbaren Drehachse rotiert werden kann und somit der Werkzeugrevolver mit beiden Spindeln ausgerichtet werden kann, so dass mit von dem mittleren Werkzeugträger gehaltenen Werkzeugen besonders flexibel sowohl an der Hauptspindel aufgenommene Werkstücke als auch an der gegenüberliegenden Gegenspindel aufgenommene Werkstücke bearbeitet werden können.

Somit kann der mittlere Werkzeugträger mit einer Drehachse vorteilhaft dazu genutzt werden bei äußerst vorteilhafter kompakter Bauweise und sehr guter Einsicht in den Bearbeitungsraum bereits eine sehr hohe Anzahl flexibel einsetzbarer Werkzeuge an der Werkzeugmaschine bereitzustellen, wobei eine sehr hohe Flexibilität bezüglich der Steuerung der relativen Bewegungen zwischen den Werkzeugen und den in den Arbeitsspindeln aufgenommenen Werkzeugen erreicht werden kann.

Zudem ist es besonders zweckmäßig, den erfindungsgemäßen mittleren Werkzeugträger mit einer Drehachse an Doppel-Spindeldrehmaschinen zwischen den Spindelträgern vorzusehen, die zwei parallel bzw. koaxial angeordnete, aufeinander zugewandte Arbeitsspindeln halten, derart, dass durch Rotation des Werkzeugträgers mittels der Drehachse sowohl Konstellationen möglich sind, bei denen Werkstücke axial als auch radial bearbeitet werden können und bei denen Werkstücke an den beiden Arbeitsspindeln gleichzeitig mit gegenüberliegenden Werkzeugen an dem Werkzeugrevolver des Werkzeugträgers bearbeitet werden können. Folglich ist es mit dem zwischen den Spindelträgern angeordneten Werkzeugträger vorteilhaft möglich, bei äußerst kompakter Bauweise mittels nur eines Werkzeugträgers bereits eine Vielzahl von unterschiedlichen Bearbeitungsmöglichkeiten mit einer Vielzahl von unterschiedlichen Werkzeugen bereitzustellen.

Gemäß der vorliegenden Erfindung wird eine Werkzeugmaschine, insbesondere Drehmaschine, vorgeschlagen, die ein Maschinengestell mit einer ersten Trägerseite und einer zweiten Trägerseite umfasst, wobei das Maschinengestell einen ersten Trägerabschnitt, einen zweiten Trägerabschnitt und einen zwischen dem ersten und dem zweiten Trägerabschnitt angeordneten mittleren Trägerabschnitt aufweist.

Erfindungsgemäß ist hierbei ein auf der ersten Trägerseite des ersten Trägerabschnitts angeordneter erster Spindelträger vorgesehen, der eine erste Arbeitsspindel zur Aufnahme eines ersten Werkstücks hält, wobei weiterhin ein auf der zweiten Trägerseite des ersten Trägerabschnitts angeordneter erster Werkzeugträgerschlitten vorgesehen ist, auf dem ein erster Werkzeugträger für Werkzeuge zur Bearbeitung des ersten Werkstücks angeordnet ist.

Die erfindungsgemäße Werkzeugmaschine umfasst weiterhin einen auf der ersten oder zweiten Trägerseite des zweiten Trägerabschnitts angeordneten ersten Spindelträgerschlitten, auf dem ein zweiter Spindelträger angeordnet ist, der eine der ersten Arbeitsspindel zugewandte zweite Arbeitsspindel zur Aufnahme eines zweiten Werkstücks hält, wobei die Spindelachse der zweiten Arbeitsspindel parallel, insbesondere koaxial, zu der Spindelachse der ersten Arbeitsspindel ausgerichtet ist, und wobei der zweite Spindelträger in Richtung parallel zu den Spindelachsen verfahrbar ist.

Zur Bearbeitung der Werkstücke ist weiterhin ein auf der ersten Trägerseite des Mittelabschnitts angeordneter zweiter Werkzeugträgerschlitten vorgesehen, auf dem ein zweiter Werkzeugträger für Werkzeuge zur Bearbeitung des ersten oder zweiten Werkstücks angeordnet ist. Erfindungsgemäß ist der zweite Werkzeugträgerschlitten auf der ersten Trägerseite zwischen dem ersten Spindelträger und dem zweiten Spindelträger angeordnet, und der zweite Werkzeugträger ist in einer ersten Richtung parallel zu den Spindelachsen der ersten und zweiten Arbeitsspindeln verfahrbar.

Weiterhin umfasst der zweite Werkzeugträgerschlitten eine Drehachse, mittels der der zweite Werkzeugträger um eine quer zu den Spindelachsen ausgerichtete Rotationsachse drehend steuerbar ist, und der zweite Werkzeugträger umfasst einen Werkzeugrevolver, der einen um eine quer zur Rotationsachse ausgerichtete Revolverachse drehbar gelagerten, werkzeugtragenden Werkzeugrevolverkopf aufweist.

Zusammenfassend ermöglicht es die vorliegende Erfindung, eine Werkzeugmaschine, insbesondere Drehmaschine, bereitzustellen, derart dass eine effizientere Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger jedoch steifer Bauweise der Werkzeugmaschine und mit für den Bearbeiter bzw. Bediener der Werkzeugmaschine sehr gut einsehbarem Bearbeitungsraum.

Erfindungsgemäß ist der Werkzeugrevolver relativ zu der Rotationsachse der Drehachse versetzt auf dem zweiten Werkzeugträger angeordnet. Somit ist der Werkzeugrevolver relativ zur Rotationsachse vorzugsweise exzentrisch auf dem zweiten Werkzeugträger angeordnet bzw. vorzugsweise ist der zweite Werkzeugträger als Exzenter ausgebildet. Dies ermöglicht es vorteilhaft das Handling des zwischen den Spindelträgern angeordneten Werkzeugträgers mit Werkzeugrevolver weiter zu verbessern, da der Revolver bei Drehen des Werkzeugträgers um die Drehachse folglich nicht nur gedreht wird, sondern auch verschwenkt wird. Es ist somit vorteilhaft möglich, den Werkzeugträger derart zwischen den Spindelträgern zu platzieren, dass der Werkzeugrevolver in den Bereich zwischen den Spindelachsen eingeschwenkt werden kann, um Werkstücke axial zu bearbeiten oder Werkstücke gleichzeitig an beiden Spindeln zu bearbeiten.

Des Weiteren kann der Werkzeugrevolver aufgrund der hohen Steuerungsflexibilität auch wieder aus dem Bereich zwischen den Spindelachsen heraus geschwenkt werden, um Werkstücke radial zu bearbeiten. Somit kann die Steuerungsflexibilität bezüglich des Zustellens der Werkzeuge an die Spindeln enorm verbessert werden. Alternativ können auch Ausführungsformen vorgesehen werden, bei denen der Werkzeugrevolver im Wesentlichen in der Rotationsachse der Drehachse liegend auf dem zweiten Werkzeugträger angeordnet ist.

Vorzugsweise ist die Revolverachse des Werkzeugrevolverkopfes, die vorzugsweise quer, insbesondere senkrecht, zur Rotationsachse der Drehachse ausgerichtet ist, durch Drehen des zweiten Werkzeugträgers um die Drehachse relativ zu den Spindelachsen drehbar bzw. verschwenkbar. Hierbei ist die Revolverachse des Werkzeugrevolverkopfes durch Drehen des zweiten Werkzeugträgers um die Drehachse vorzugsweise quer, insbesondere senkrecht, zu den Spindelachsen ausrichtbar, vorzugsweise parallel zu den Spindelachsen ausrichtbar ist, und/oder vorzugsweise mit beliebigem Winkel zu den Spindelachsen ausrichtbar.

Dies ermöglicht es bei äußerst flexiblen Steuerungsmöglichkeiten bzw. Zustellungsmöglichkeiten mittels des zwischen den Spindelträgern angeordneten Werkzeugträgers vorteilhaft Werkstücke an den Spindeln sowohl radial als auch axial zu bearbeiten. Werden zum Beispiel relativ zum Revolver radial ausgerichtete Werkzeugeinheiten benutzt, kann ein Werkstück radial (relativ zu den Spindelachsen) bearbeitet werden, wenn die Revolverachse im Wesentlichen parallel zu den Spindelachsen ausgerichtet ist, und das Werkstück kann axial bearbeitet werden, wenn die Revolverachse im Wesentlichen quer zu den Spindelachsen ausgerichtet ist. Werden jedoch relativ zum Revolver axial ausgerichtete Werkzeugeinheiten benutzt, kann ein Werkstück axial bearbeitet werden, wenn die Revolverachse im Wesentlichen parallel zu den Spindelachsen ausgerichtet ist, und das Werkstück kann radial bearbeitet werden, wenn die Revolverachse im Wesentlichen quer zu den Spindelachse ausgerichtet ist.

Am zweckmäßigsten ist es hierbei an den mehreren Werkzeugaufnahmen des Werkzeugrevolvers radiale als auch axiale Werkzeugeinheiten vorzusehen. Vorzugsweise weist der Werkzeugrevolverkopf dafür eine Mehrzahl von Aufnahmen zum Aufnehmen von Werkzeugen oder werkzeughaltenden Werkzeughaltern auf, wobei die Aufnahmen insbesondere dazu eingerichtet sind, Radial-Werkzeughalter bzw. Radial-Werkzeughaltereinheiten aufzunehmen, die Werkzeuge radial relativ zur Revolverachse halten, und Axial-Werkzeughalter bzw. Axial-Werkzeughaltereinheiten aufzunehmen, die Werkzeuge axial relativ zur Revolverachse halten. Dies ermöglicht eine hohe Anzahl von Bearbeitungsmöglichkeiten bzw. Bearbeitungskonstellationen der Werkstücke bei einfacher und flexibler Bauweise.

Vorzugsweise ist der zweite Werkzeugträger dazu eingerichtet, eine Aufnahme des Werkzeugrevolverkopfes durch Rotation des Werkzeugrevolverkopfes um die Revolverachse auf ein an einer der Arbeitsspindeln aufgenommenes Werkstück auszurichten, wobei die Aufnahmen vorzugsweise jeweils paarweise relativ zur Revolverachse auf gegenüberliegenden Seiten auf dem Werkzeugrevolverkopf angeordnet sind, derart, dass vorzugsweise jeweils eine Aufnahme mit der zweiten Arbeitsspindel ausrichtbar ist, indem eine andere, gegenüberliegende Aufnahme mit der ersten Arbeitsspindel ausgerichtet wird, wenn die Revolverachse quer, insbesondere senkrecht, zu den Spindelachsen ausgerichtet ist. Dies kann vorteilhaft bereitgestellt werden, indem der Werkzeugrevolver zwischen die Spindeln verschwenkbar ist und die Revolverachse dabei quer zu den Spindelachsen ausrichtbar ist.

Bei einer derartigen Konstellation ist es vorteilhaft möglich, den Werkzeugrevolver derart zu positionieren, dass eine Werkzeugaufnahme bzw. ein an der Aufnahme gehaltener Werkzeughalter oder ein an der Aufnahme gehaltenes Werkzeug mit der ersten Arbeitsspindel zur Bearbeitung eines an der ersten Spindel gehaltenen Werkstücks ausrichtbar ist, während eine auf dem Werkzeugrevolver auf der gegenüberliegenden Seite relativ zur Revolverachse angeordnete Werkzeugaufnahme bzw. ein an der Aufnahme gehaltener Werkzeughalter oder ein an der Aufnahme gehaltenes Werkzeug mit der zweiten Arbeitsspindel zur Bearbeitung eines an der zweiten Spindel gehaltenen Werkstücks ausrichtbar ist. Dies ermöglicht besonders zweckmäßig eine gleichzeitige Bearbeitung beider an den Spindeln gehaltener Werkstücke mit dem gleichen Werkzeugträger bzw. Werkzeugrevolver.

Erfindungsgemäß ist der zweite Werkzeugträgerschlitten als Kreuzschlitten ausgebildet und erfindungsgemäß ist der zweite Werkzeugträger weiterhin in einer zweiten Richtung quer oder senkrecht zu den Spindelachsen der ersten und zweiten Arbeitsspindeln verfahrbar. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise umfasst der zweite Werkzeugträgerschlitten weiterhin eine Linearachse, mittels der der zweite Werkzeugträger weiterhin in einer dritten Richtung quer, insbesondere senkrecht, zu den Spindelachsen der ersten und zweiten Arbeitsspindeln und quer, insbesondere senkrecht, zu der zweiten Richtung verfahrbar ist. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise umfasst die Linearachse des zweiten Werkzeugträgerschlittens eine am zweiten Werkzeugträgerschlitten gelagerte, ein- bzw. ausfahrbare Welle bzw. Pinole (Hohlwelle), an deren einem Ende der zweite Werkzeugträger vorzugsweise angebracht ist. Dies ermöglicht es, den zwischen den Arbeitsspindeln angeordneten Werkzeugträger und dessen Werkzeugträgerschlitten vorteilhaft kompakt bereitzustellen. Mit einer Linearachse mit ein- bzw. ausfahrbarer Welle bzw. Pinole (Hohlwelle) ist hierbei gemeint, dass kein einfacher Doppel-Kreuzschlitten vorgesehen ist mit drei relativ zueinander verfahrbaren Werkzeugträgerschlitten, die aufeinander angeordnet sind, sondern, dass eine in der dritten Richtung ausgerichtete Welle bzw. Pinole in einem Hohlelement (bzw. Pinolenträgerabschnitt) eines Kreuzschlittens verfahrbar gelagert ist, um die dritte Linearachse des Werkzeugträgerschlittens bereitzustellen.

Eine derartige Welle bzw. Pinole (Hohlwelle) kann weiterhin vorteilhaft drehbar gelagert sein um die Drehachse des zwischen den Spindelträgern angeordneten Werkzeugträgers auszubilden. Somit kann die Ausbildung der Linearachse der dritten Richtung auf besonders einfache und kompakte Weise mit der rotierbar steuerbaren Drehachse des Werkzeugträgers kombiniert werden. Hierbei ist vorzugsweise ein Torque-Motor vorgesehen, der die in der dritten Richtung verfahrbare Welle bzw. Pinole (Hohlwelle) drehbar antreibt, um die Drehachse des Werkzeugträgers auszubilden.

Vorzugsweise umfasst die Werkzeugmaschine einen zweiten in Richtung der Spindelachsen verfahrbaren Spindelträgerschlitten, der auf der ersten Trägerseite des ersten Trägerabschnitts angeordnet ist, und auf dem der erste Spindelträger der ersten Arbeitsspindel gehalten ist. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise ist ein in Richtung parallel zu den Spindelachsen verfahrbarer Reitstockschlitten an dem ersten oder zweiten Spindelträger angeordnet, der einen Reitstock mit einer Reitstockspitze trägt. Dies ermöglicht es vorteilhaft, die Anwendungsflexibilität der Werkzeugmaschine weiter zu verbessern, da zusätzlich ein vorteilhaft angeordneter Reitstock bereitgestellt werden kann. Hierbei ist die Verfahrbarkeit des Reitstockschlittens an dem ersten oder zweiten Spindelträger in Richtung der Spindelachsen besonders zweckmäßig, da der Reitstock bzw. dessen Reitstockspitze bzw. Zentrierspitze zur gegenüberliegenden Spindel in den Bearbeitungsraum hinein verfahren werden kann, wenn er eingesetzt werden soll, und der Reitstock kann weg von der gegenüberliegenden Spindel aus dem Bearbeitungsraum heraus verfahren werden, wenn er nicht benötigt wird.

Gemäß einem besonders zweckmäßigen Ausführungsbeispiel der erfindungsgemäßen Werkzeugmaschine ist der erste Spindelträgerschlitten auf der ersten Trägerseite angeordnet, wobei vorzugsweise parallel zu den Spindelachsen ausgerichtete Führungen auf der ersten Trägerseite des mittleren Trägerabschnitts und des zweiten Trägerabschnitts angeordnet sind, auf denen vorzugsweise sowohl der zweite Werkzeugträgerschlitten als auch der erste Spindelträgerschlitten in Richtung parallel zu den Spindelachsen verfahrbar geführt sind. In diesem Ausführungsbeispiel kann eine besonders kompakte und einfache Bauweise bereitgestellt werden, da der erste Spindelträgerschlitten und der zweite Werkzeugträgerschlitten auf den gleichen Führungen, insbesondere auf gleichen Führungsschienen, geführt werden können. Die Führungen erstrecken sich hierbei vorzugsweise durchgängig auf der ersten Trägerseite auf dem mittleren Trägerabschnitt und dem zweiten Trägerabschnitt.

In einer Ausführung, in der auch die andere der beiden Spindeln auf einem Spindelträgerschlitten in Richtung der Spindelachsen verfahrbar angeordnet ist, erstrecken sich die Führungen vorzugsweise durchgängig auf der ersten Trägerseite auf dem ersten Trägerabschnitt, dem mittleren Trägerabschnitt und dem zweiten Trägerabschnitt, wobei vorzugsweise beide Spindelträgerschlitten und der zweite Werkzeugträgerschlitten auf den gleichen Führungen auf der ersten Trägerseite geführt sind.

Vorzugsweise umfasst die Werkzeugmaschine in diesem Ausführungsbeispiel einen auf der zweiten Trägerseite des zweiten Trägerabschnitts angeordneten dritten Werkzeugträgerschlitten, auf dem ein dritter Werkzeugträger für Werkzeuge zur Bearbeitung des zweiten Werkstücks angeordnet ist. Somit kann eine noch höhere Zahl von Werkstücken zur Bearbeitung bereitgestellt werden und es kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise sind der erste Werkzeugträgerschlitten und/oder der dritte Werkzeugträgerschlitten in Richtung parallel zu den Spindelachsen verfahrbar. Hierbei sind vorzugsweise in Richtung parallel zu den Spindelachsen ausgerichtete Führungen auf der zweiten Trägerseite angeordnet, die sich vorzugsweise von dem ersten Trägerabschnitt über den mittleren Trägerabschnitt zu dem zweiten Trägerabschnitt erstrecken, und auf denen vorzugsweise sowohl der erste Werkzeugträgerschlitten als auch der dritte Werkzeugträgerschlitten in Richtung parallel zu den Spindelachsen verfahrbar geführt sind. In diesem Ausführungsbeispiel kann eine besonders kompakte und einfache Bauweise bereitgestellt werden, da der erste Werkzeugträgerschlitten und der dritte Werkzeugträgerschlitten auf den gleichen Führungen, insbesondere auf gleichen Führungsschienen, geführt werden kann. Die Führungen erstrecken sich hierbei vorzugsweise durchgängig auf der zweiten Trägerseite auf dem ersten Trägerabschnitt, dem mittleren Trägerabschnitt und dem zweiten Trägerabschnitt.

Gemäß einem alternativen, ebenfalls besonders zweckmäßigen Ausführungsbeispiel der erfindungsgemäßen Werkzeugmaschine ist der erste Spindelträgerschlitten auf der zweiten Trägerseite angeordnet, wobei vorzugsweise in Richtung parallel zu den Spindelachsen ausgerichtete Führungen auf der zweiten Trägerseite angeordnet sind, die sich vorzugsweise von dem ersten Trägerabschnitt über den mittleren Trägerabschnitt zu dem zweiten Trägerabschnitt erstrecken, auf denen vorzugsweise sowohl der erste Werkzeugträgerschlitten als auch der erste Spindelträgerschlitten in Richtung parallel zu den Spindelachsen verfahrbar geführt sind. In diesem Ausführungsbeispiel kann ebenfalls eine besonders kompakte und einfache Bauweise bereitgestellt werden, da der erste Spindelträgerschlitten und der erste Werkzeugträgerschlitten auf den gleichen Führungen, insbesondere auf gleichen Führungsschienen, geführt werden können. Die Führungen erstrecken sich hierbei vorzugsweise durchgängig auf der zweiten Trägerseite auf dem ersten Trägerabschnitt, dem mittleren Trägerabschnitt und dem zweiten Trägerabschnitt.

Vorzugsweise ist der erste Spindelträgerschlitten als Kreuzschlitten ausgebildet und umfasst vorzugsweise einen ersten, in Richtung parallel zu den Spindelachsen verfahrbaren Spindelträger-Teilschlitten und einen zweiten Spindelträger-Teilschlitten, der vorzugsweise in Richtung quer, insbesondere senkrecht, zu den Spindelachsen verfahrbar auf dem ersten Spindelträger-Teilschlitten angeordnet ist. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

In diesem Ausführungsbeispiel, bei dem der erste Spindelträgerschlitten als Kreuzschlitten ausgebildet ist, ist vorzugsweise ein in Richtung parallel zu den Spindelachsen verfahrbarer Reitstockschlitten vorgesehen, der an dem ersten Spindelträger angeordnet ist, und der einen Reitstock mit einer Reitstockspitze trägt. Vorzugsweise ist dann die Verfahrbarkeitsrichtung des Spindelträgerschlittens der zweiten Arbeitsspindel quer zu den Spindelachsen parallel ausgerichtet zu einem Lot, welches die Spindelachsen und die Reitstockachse senkrecht schneidet, derart, dass durch Verfahren des ersten Spindelträgerschlittens in der Richtung quer zu den Spindelachsen vorzugsweise sowohl die Spindelachsen koaxial miteinander ausrichtbar sind als auch die Spindelachse der ersten Arbeitsspindel koaxial mit der Reitstockachse des Reitstocks ausrichtbar ist.

Dies ermöglicht es bei einfacher und kompakter Bauweise durch Verfahren des ersten Spindelträgerschlittens quer zu den Spindelachsen entweder die Reitstockachse für eine Reitstockanwendung koaxial mit der ersten Arbeitsspindel auszurichten oder die zweite Arbeitsspindel koaxial mit der ersten Arbeitsspindel auszurichten. Somit können die Anwendungsmöglichkeiten der Werkzeugmaschine bei einfacher und kompakter Bauweise weiterhin wesentlich verbessert werden.

Vorzugsweise sind der erste Werkzeugträgerschlitten und/oder ein dritter, auf der zweiten Trägerseite angeordneter Werkzeugträgerschlitten als Doppel-Kreuzschlitten ausgebildet, wobei vorzugsweise ein erster Teilschlitten in Richtung parallel zu den Spindelachsen verfahrbar angeordnet ist, ein zweiter Teilschlitten in Richtung quer, insbesondere senkrecht, zu den Spindelachsen verfahrbar angeordnet ist, und/oder ein dritter Teilschlitten in Richtung quer, insbesondere senkrecht, zu den Spindelachsen und quer, gegebenenfalls auch senkrecht, zu der Verfahrrichtung des zweiten Teilschlittens verfahrbar angeordnet ist. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise spannt die erste Trägerseite eine erste Ebene auf und vorzugsweise spannt die zweite Trägerseite eine zweite Ebene auf, wobei die erste Ebene vorzugsweise parallel oder senkrecht zur zweiten Ebene ausgerichtet ist. Alternativ und besonders zweckmäßig kann die erste Ebene auch schräg zur zweiten Ebene ausgerichtet sein. Bei einer schrägen Ausführung des Winkels zwischen der ersten Ebene und der zweiten Ebene kann ein Maschinengestell bereit gestellt werden, das zugleich äußerst kompakt als auch äußerst steif gebaut werden kann.

Vorzugsweise spannt bei Ausführungen mit auf der zweiten Trägerseite angeordnetem Spindelträgerschlitten eine erste Seite des ersten Spindelträger-Teilschlittens, die der zweiten Trägerseite zugewandt ist, eine dritte Ebene auf, die vorzugsweise parallel zur zweiten Ebene ausgerichtet ist, und eine zweite Seite des ersten Spindelträger-Teilschlittens, die dem zweiten Spindelträger-Teilschlitten zugewandt ist, spannt vorzugsweise eine vierte Ebene auf, die parallel zur ersten Ebene ausgerichtet ist, wobei der erste Spindelträger-Teilschlitten insbesondere als Keilschlitten ausgebildet sein kann, derart, dass der zweite Spindelträger-Teilschlitten insbesondere parallel zu der ersten Ebene auf dem ersten Spindelträger-Teilschlitten verfahrbar angeordnet ist.

Dies hat den Vorteil, dass der zweite Spindelträger-Teilschlitten bei einfacher und kompakter Bauweise auf dem ersten Spindelträger-Teilschlitten unabhängig von der Ausrichtung der ersten zur zweiten Ebene (d.h. parallel, schräg oder senkrecht) in einer Richtung parallel zur vierten bzw. parallel zur ersten Ebene der ersten Trägerseite verfahren werden kann.

Vorzugsweise spannt eine erste Seite des zweiten Teilschlittens des ersten und/oder dritten Werkzeugträgerschlittens, die dem ersten Teilschlitten auf der zweiten Trägerseite zugewandt ist, eine fünfte Ebene auf, die vorzugsweise parallel zur zweiten Ebene ausgerichtet ist, und eine zweite Seite des zweiten Teilschlittens, die vorzugsweise dem dritten Teilschlitten zugewandt ist, spannt vorzugsweise eine sechste Ebene auf, die vorzugsweise parallel zur ersten Ebene ausgerichtet ist, wobei der zweite Teilschlitten insbesondere als Keilschlitten ausgebildet sein kann, derart, dass der dritte Teilschlitten insbesondere parallel zu der ersten Ebene auf dem zweiten Teilschlitten verfahrbar angeordnet ist.

Dies hat den Vorteil, dass der dritte Werkzeugträger-Teilschlitten bei einfacher und kompakter Bauweise auf dem zweiten Werkzeugträger-Teilschlitten unabhängig von der Ausrichtung der ersten zur zweiten Ebene (d.h. parallel, schräg oder senkrecht) in einer Richtung parallel zur sechsten bzw. parallel zur ersten Ebene der ersten Trägerseite verfahren werden kann. Hierbei ist bei schrägen Ausführungen des Winkels zwischen der ersten und der zweiten Trägerseite bzw. zwischen der ersten Ebene und der zweiten Ebene der zweite Teilschlitten vorzugsweise als Keilschlitten ausgebildet, der eine Keilform aufweist mit einem schrägen Winkel, der den schrägen Winkel zwischen der ersten und der zweiten Trägerseite bzw. zwischen der ersten Ebene und der zweiten Ebene derart ausgleicht, dass der dritte Teilschlitten trotz des Winkels parallel zur ersten Trägerseite bzw. zur ersten Ebene verfahren werden kann bzw. senkrecht zur zweiten Trägerseite bzw. zur zweiten Ebene verfahren werden kann, so dass der Werkzeugträger optimal und flexibel zu den Spindeln zugestellt werden kann.

Vorzugsweise ist die Rotationsachse der Drehachse quer, vorzugsweise im Wesentlichen senkrecht, zur ersten Ebene ausgerichtet.

### Kurzbeschreibung der Figuren

**Fig.1** zeigt beispielhaft eine schematische Darstellung einer Perspektivansicht des Maschinengestellaufbaus einer Werkzeugmaschine gemäß einer bevorzugten Ausführungsform der vorliegenden Erfindung.
**Fig. 2** zeigt beispielhaft eine schematische Darstellung einer Vorderansicht einer Werkzeugmaschine gemäß einem ersten Ausführungsbeispiel der vorliegenden Erfindung.
**Fig. 3** zeigt beispielhaft eine weitere schematische Darstellung einer Draufsicht der Werkzeugmaschine gemäß dem ersten Ausführungsbeispiel der vorliegenden Erfindung aus **Fig. 2****.**
**Figs. 4A** bis **4D** zeigen beispielhaft schematische Darstellungen einer Detailansicht des zwischen den Spindelträgern angeordneten Werkzeugträgers der Werkzeugmaschine gemäß dem ersten Ausführungsbeispiel der vorliegenden Erfindung aus **Fig. 2****.**
**Figs. 5A** bis **5D** zeigen beispielhaft weitere schematische Darstellungen einer Detailansicht des zwischen den Spindelträgern angeordneten Werkzeugträgers der Werkzeugmaschine gemäß dem ersten Ausführungsbeispiel der vorliegenden Erfindung aus **Fig. 2****.**
**Fig. 6A** zeigt beispielhaft eine schematische Darstellung einer perspektivischen Vorderansicht des zwischen den Spindelträgern angeordneten Werkzeugträgers der Werkzeugmaschine gemäß dem ersten Ausführungsbeispiel der vorliegenden Erfindung aus **Fig. 2** und **Fig. 6B** zeigt beispielhaft eine schematische Darstellung einer perspektivischen Rückansicht des zwischen den Spindelträgern angeordneten Werkzeugträgers der Werkzeugmaschine gemäß dem ersten Ausführungsbeispiel der vorliegenden Erfindung aus **Fig. 2****.**
**Fig. 6C** zeigt beispielhaft eine schematische Darstellung einer perspektivischen Schnittansicht des zwischen den Spindelträgern angeordneten Werkzeugträgers der Werkzeugmaschine gemäß dem ersten Ausführungsbeispiel der vorliegenden Erfindung aus **Fig. 2** und **Fig. 6D** zeigt beispielhaft eine schematische Darstellung einer Schnittansicht des zwischen den Spindelträgern angeordneten Werkzeugträgers der Werkzeugmaschine gemäß dem ersten Ausführungsbeispiel der vorliegenden Erfindung aus **Fig. 2****.**
**Fig. 7** zeigt beispielhaft eine schematische Darstellung einer perspektivischen Vorderansicht eines auf der zweiten Trägerseite angeordneten Werkzeugträgers der Werkzeugmaschine gemäß dem ersten Ausführungsbeispiel der vorliegenden Erfindung aus **Fig. 2****.**
**Fig. 8** zeigt beispielhaft eine schematische Darstellung einer Vorderansicht einer Werkzeugmaschine gemäß einem zweiten Ausführungsbeispiel der vorliegenden Erfindung.
**Fig. 9A** zeigt beispielhaft eine schematische Darstellung einer perspektivischen Vorderansicht des Spindelträgerschlittens der Werkzeugmaschine gemäß dem zweiten Ausführungsbeispiel der vorliegenden Erfindung aus **Fig. 8** und **Fig. 9B** zeigt beispielhaft eine schematische Darstellung einer perspektivischen Detailansicht des Spindelträgerschlittens der Werkzeugmaschine gemäß dem zweiten Ausführungsbeispiel der vorliegenden Erfindung aus **Fig. 8****.**
**Fig. 10** zeigt beispielhaft eine schematische Darstellung einer Vorderansicht einer Werkzeugmaschine gemäß einem dritten Ausführungsbeispiel der vorliegenden Erfindung.
**Fig. 11A** zeigt beispielhaft eine schematische Darstellung einer perspektivischen Vorderansicht einer alternativen Ausführungsform des zwischen den Spindelträgern angeordneten Werkzeugträgers der Werkzeugmaschine und **Fig. 11B** zeigt beispielhaft eine schematische Darstellung einer perspektivischen Rückansicht der alternativen Ausführungsform des zwischen den Spindelträgern angeordneten Werkzeugträgers der Werkzeugmaschine aus **Fig. 11A****.**
**Fig. 11C** zeigt beispielhaft eine schematische Darstellung einer perspektivischen Schnittansicht der alternativen Ausführungsform des zwischen den Spindelträgern angeordneten Werkzeugträgers der Werkzeugmaschine aus **Fig. 11A****.**
**Fig. 11D** zeigt beispielhaft eine schematische Darstellung einer weiteren perspektivischen Rückansicht der alternativen Ausführungsform des zwischen den Spindelträgern angeordneten Werkzeugträgers der Werkzeugmaschine aus **Fig. 11A** und **Fig. 11E** zeigt beispielhaft eine schematische Darstellung einer weiteren perspektivischen Vorderansicht der alternativen Ausführungsform des zwischen den Spindelträgern angeordneten Werkzeugträgers der Werkzeugmaschine aus **Fig. 11A****.**
**Fig. 11F** zeigt beispielhaft eine schematische Darstellung einer Schnittansicht der alternativen Ausführungsform des zwischen den Spindelträgern angeordneten Werkzeugträgers der Werkzeugmaschine aus **Fig. 11A****.**

### Ausführliche Beschreibung bevorzugter

### Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

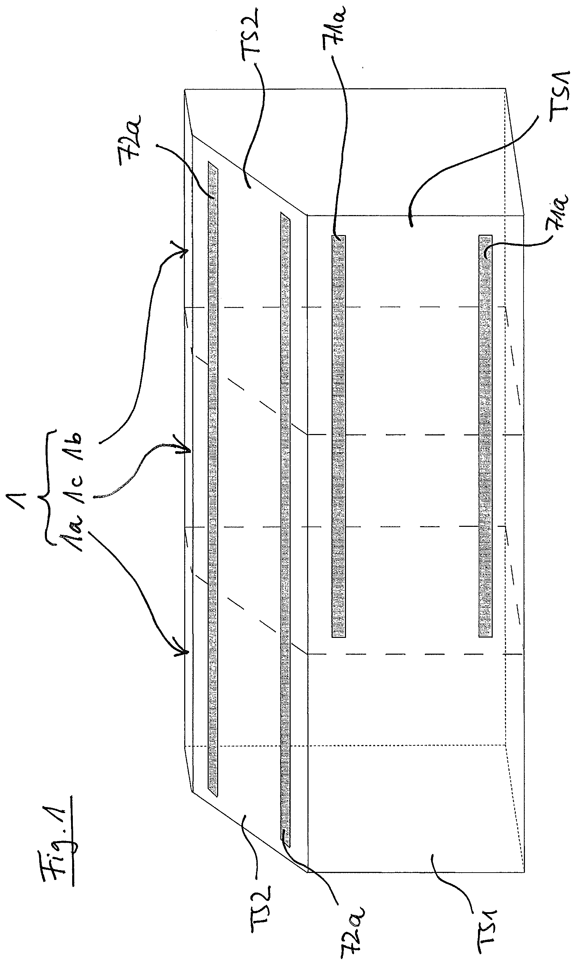

**Fig.1** zeigt beispielhaft eine schematische Darstellung einer Perspektivansicht des Maschinengestellaufbaus eines Maschinengestells 1 einer Werkzeugmaschine gemäß einer bevorzugten Ausführungsform der vorliegenden Erfindung.

Das Maschinengestell 1 hat in diesem Beispiel eine erste Trägerseite TS1, die beispielhaft auf der Vorderseite des Maschinengestells 1 angeordnet ist, und eine zweite Trägerseite TS2, die beispielhaft auf der Oberseite des Maschinengestells 1 angeordnet ist. In anderen Ausführungen kann das Maschinengestell auch anders orientiert sein, z.B. derart, dass die erste Trägerseite TS1 auf der Oberseite des Maschinengestells angeordnet ist und die zweite Trägerseite TS2 auf der Vorder- oder Rückseite angeordnet ist.

Das Maschinengestell 1 weist einen ersten Trägerabschnitt 1a, einen zweiten Trägerabschnitt 1b und einen zwischen dem ersten und dem zweiten Trägerabschnitt angeordneten mittleren Trägerabschnitt 1c auf. Die Übergänge zwischen den Trägerabschnitten sind in **Fig. 1** beispielhaft durch gestrichelte Linien dargestellt. In diesem Ausführungsbeispiel gemäß **Fig. 1** sind die Trägerabschnitte 1a bis 1c miteinander verbunden, können jedoch in anderen Ausführungsbeispielen der Erfindung auch getrennt voneinander bereitgestellt werden.

Auf den Trägerseiten sind in **Fig. 1** schematisch Führungen 71a, insbesondere Führungsschienen, auf der ersten Trägerseite TS1 parallel angeordnet und Führungen 72a, insbesondere Führungsschienen, auf der zweiten Trägerseite TS2 parallel angeordnet. Hierbei sind die Führungen 71a und 72a dazu eingerichtet, Werkzeugträger- und/oder Spindelträgerschlitten in Richtung der Führungen verfahrbar zu führen.

Die Führungen 71a auf der ersten Trägerseite TS1 des Maschinengestells 1 erstrecken sich hierbei beispielhaft auf der ersten Trägerseite TS1 durchgängig über den mittleren Trägerabschnitt 1c und den zweiten Trägerabschnitt 1b. Die Führungen 72a auf der zweiten Trägerseite TS2 des Maschinengestells 1 erstrecken sich beispielhaft auf der zweiten Trägerseite TS2 durchgängig über den ersten Trägerabschnitt 1a, den mittleren Trägerabschnitt 1c und den zweiten Trägerabschnitt 1b.

Die erste Trägerseite TS1 spannt eine erste Ebene auf und die zweite Trägerseite TS2 spannt eine zweite Ebene auf, wobei die erste Ebene schräg zur zweiten Ebene ausgerichtet ist. Dies ermöglicht eine zugleich kompakte und steife Bauweise des Maschinengestells. Durch die Schrägstellung der ersten Trägerseite TS1 zur zweiten Trägerseite TS2 kann in Fig. 1 zum Beispiel eine erforderliche Stellfläche des Maschinengestells reduziert werden, ohne die für Führungen 72a erforderliche und zur Verfügung stehende Fläche der zweite Trägerseite TS2 zu verringern. In anderen Ausführungsbeispielen können die erste Ebene und die zweite Ebene auch parallel oder senkrecht zueinander ausgerichtet sein.

Hierbei ist es nicht notwendigerweise erforderlich, dass der Grundkörper des Maschinengestells genau ebenflächige Seiten aufweist, die die genannten Ebenen aufspannen. Vielmehr können die vorstehend genannten Ebenen abstrakter verstanden werden als geometrische Ebenen, die im Wesentlichen der Seiten des Maschinengestells entsprechen bzw. im Wesentlichen von den jeweiligen Seiten des Maschinengestells aufgespannt werden, oder als geometrische Ebenen in denen die Verfahrebenen der Schlitten liegen, die z.B. durch die Führungen 71a und 72a für Schlitten ausgebildet bzw. aufgespannt werden. Diese können auch als Führungsebenen bezeichnet werden.

### Erstes Ausführungsbeispiel

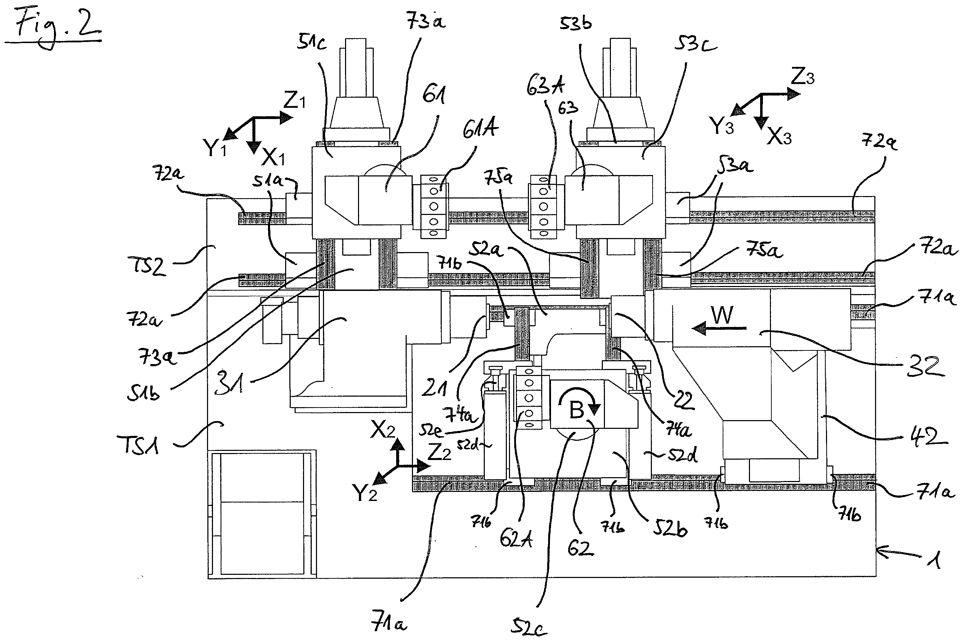

**Fig. 2** zeigt beispielhaft eine schematische Darstellung einer Vorderansicht einer Werkzeugmaschine gemäß einem ersten Ausführungsbeispiel der vorliegenden Erfindung. Das Maschinengestell 1 entspricht hierbei dem Maschinengestellaufbau gemäß **Fig. 1****,** d.h. die erste Trägerseite TS1 und die zweite Trägerseite TS2 sind schräg zueinander ausgerichtet.

Die Werkzeugmaschine gemäß **Fig. 2** umfasst einen auf der ersten Trägerseite TS1 des ersten Trägerabschnitts 1a angeordneten ersten Spindelträger 31, der eine erste Arbeitsspindel 21 zur Aufnahme eines ersten Werkstücks W1 hält, und einen auf der zweiten Trägerseite TS2 des ersten Trägerabschnitts 1a angeordneten ersten Werkzeugträgerschlitten mit Teilschlitten 51a, 51b und 51c, wobei auf dem ersten Werkzeugträgerschlitten (insbesondere auf dem Teilschlitten 51c) ein erster Werkzeugträger 61 für Werkzeuge zur Bearbeitung des ersten Werkstücks W1 an der ersten Arbeitsspindel 21 angeordnet ist. In diesem Ausführungsbeispiel ist der erste Werkzeugträger 61 als Radial-Werkzeugrevolver ausgebildet mit einem Werkzeugrevolverkopf 61A, dessen Revolverachse beispielhaft parallel mit der Spindelachse der ersten Arbeitsspindel 21 ausgerichtet ist.

Weiterhin umfasst die Werkzeugmaschine einen auf der ersten Trägerseite TS1 des zweiten Trägerabschnitts 1b angeordneten ersten Spindelträgerschlitten 42, auf dem ein zweiter Spindelträger 32 angeordnet ist, der eine der ersten Arbeitsspindel 21 zugewandte zweite Arbeitsspindel 22 zur Aufnahme eines zweiten Werkstücks W2 hält. Die Spindelachse der zweiten Arbeitsspindel 22 ist beispielhaft koaxial zu der Spindelachse der ersten Arbeitsspindel 21 ausgerichtet. Der zweite Spindelträger 32 ist in Richtung W parallel zu den Spindelachsen verfahrbar und ist hierfür auf dem ersten Spindelträgerschlitten 42 gehalten, der auf den Führungsschienen 71a geführt wird. Wie in **Fig. 1** erstrecken sich die Führungen 71a parallel zueinander und parallel zu den Spindelachsen durchgängig über den mittleren Trägerabschnitt 1c und den zweiten Trägerabschnitt 1b.

In diesem Ausführungsbeispiel ist der Spindelträger 31 an dem Maschinengestell 1 fixiert und die erste Arbeitsspindel 21 ist nicht verfahrbar. Jedoch können auch Ausführungsbeispiele bereitgestellte werden, in denen die erste Arbeitsspindel 21 in Richtung parallel zu den Spindelachsen verfahrbar ist, z.B. indem die Führungen 71a sich weiterhin zu dem ersten Trägerabschnitt 1a erstrecken und der Spindelträger 31 analog zu dem Spindelträger 32 auf einem Spindelträgerschlitten auf den Führungen 71a geführt wird. Es ist dann zugunsten einer äußerst kompakten Bauweise vorteilhaft möglich beide Spindelträgerschlitten sowie den zwischen den Spindelträgern angeordneten Werkzeugträgerschlitten 52 auf den gleichen Führungen 71a zu führen.

Weiterhin umfasst die Werkzeugmaschine einen auf der ersten Trägerseite TS1 des Mittelabschnitts 1c angeordneten zweiten Werkzeugträgerschlitten 52 umfassend Teilschlitten 52a und 52b sowie einen Abschnitt 52c (z.B. ein Pinolenträgerabschnitt), an dem ein zweiter Werkzeugträger 62 für Werkzeuge zur Bearbeitung des ersten Werkstücks W1 an der ersten Arbeitsspindel 21 oder eines zweiten Werkstücks W2 an der zweiten Arbeitsspindel angeordnet ist. Der zweite Werkzeugträgerschlitten 52 ist auf der ersten Trägerseite TS1 des Maschinengestells 1 zwischen dem ersten Spindelträger 31 und dem zweiten Spindelträger 32 angeordnet.

Der zweite Werkzeugträger 62 ist in einer ersten Richtung Z2 parallel zu den Spindelachsen der ersten und zweiten Arbeitsspindeln 21, 22 verfahrbar. Hierfür wird der Teilschlitten 52a auf den Führungen 71a auf der ersten Trägerseite TS1 geführt und ist in der ersten Richtung Z2 parallel zu den Spindelachsen der ersten und zweiten Arbeitsspindeln 21, 22 verfahrbar.

In diesem Ausführungsbeispiel ist somit der erste Spindelträgerschlitten 42 beispielhaft auf der ersten Trägerseite TS1 angeordnet, wobei die parallel zu den Spindelachsen ausgerichteten Führungsschienen 71a auf der ersten Trägerseite TS1 des mittleren Trägerabschnitts 1c und des zweiten Trägerabschnitts 1b angeordnet sind, auf denen somit sowohl der zweite Werkzeugträgerschlitten 52, insbesondere Teilschlitten 52a, als auch der erste Spindelträgerschlitten 42 in Richtung Z2, W parallel zu den Spindelachsen verfahrbar geführt sind. Hierfür sind sowohl an dem Teilschlitten 52a als auch an dem ersten Spindelträgerschlitten 42 Führungselemente 71b für die Führungsschienen 71a vorgesehen.

Der zweite Werkzeugträgerschlitten 52 ist als Kreuzschlitten ausgebildet und umfasst den Teilschlitten 52a, der auf den Führungen 71a in Richtung parallel zu den Spindelachsen verfahrbar ist, und den Teilschlitten 52b, der auf dem Teilschlitten 52a angeordnet ist und der von Führungen 74a geführt wird, die auf dem Teilschlitten 52a angeordnet sind und in einer zweiten Richtung X2 senkrecht zu den Spindelachsen ausgerichtet sind. Der Teilschlitten 52b und somit der zweite Werkzeugträger 62 ist somit weiterhin in der zweiten Richtung X2 senkrecht zu den Spindelachsen der ersten und zweiten Arbeitsspindeln 21, 22 verfahrbar. Hierfür ist zum Antreiben den Linearachse für die zweite Richtung X2 ein Hydrauliksystem vorgesehen, das zwei Hydraulikzylinder 52d umfasst, die relativ zu der Richtung der Spindelachsen auf gegenüberliegenden Seiten des Teilschlittens 52a angeordnet sind und sich in der zweiten Richtung X2 erstrecken. Weiterhin sind in den Hydraulikzylindern 52d jeweilige Hydraulikkolben 52e vorgesehen, die sich einseitig aus den Zylindern 52d heraus erstrecken und durch hydraulische Kräfte an den Zylindern 52d ein- bzw. ausgefahren werden können. **Fig. 2** zeigt die Hydraulikkolben 52e, die an den Zylindern 52d gegenüberliegenden Enden mit dem Teilschlitten 52b verbunden sind, in einem eingefahrenen Zustand.

Der zweite Werkzeugträgerschlitten 52 umfasst zudem eine weitere Linearachse, mittels der der zweite Werkzeugträger 62 in einer dritten Richtung Y2 senkrecht zu den Spindelachsen der ersten und zweiten Arbeitsspindeln 21, 22 und senkrecht zu der zweiten Richtung X2 verfahrbar ist. Beispielhafte Ausführungsformen dieser Linearachse werden weiter unten beschrieben.

Der zweite Werkzeugträgerschlitten 52 umfasst weiterhin eine Drehachse B, mittels der der zweite Werkzeugträger 62 um eine quer zu den Spindelachsen ausgerichtete Rotationsachse drehend steuerbar ist. Der zweite Werkzeugträger 62 umfasst einen Werkzeugrevolver, der einen um eine quer zur Rotationsachse ausgerichtete Revolverachse drehbar gelagerten, werkzeugtragenden Werkzeugrevolverkopf 62A aufweist. Der Werkzeugrevolver 62A ist hierbei seitlich und relativ zu der Rotationsachse der Drehachse B versetzt auf dem Werkzeugträger 62 angeordnet. Der Werkzeugrevolver 62A ist somit in dieser Ausführungsform vorteilhaft exzentrisch relativ zu der Rotationsachse der Drehachse B auf dem Werkzeugträger 62 angeordnet und der Werkzeugträger 62 ist als Exzenter ausgebildet.

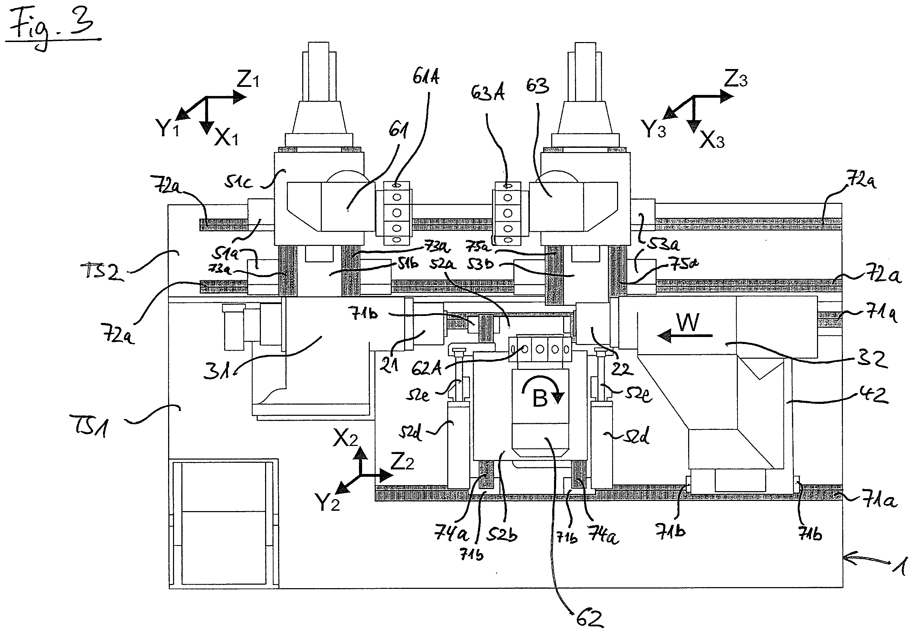

**Fig. 3** zeigt beispielhaft eine weitere schematische Darstellung einer Draufsicht der Werkzeugmaschine gemäß dem ersten Ausführungsbeispiel der vorliegenden Erfindung aus **Fig. 2****.** Hierbei ist der zweite Werkzeugträger 62 und somit auch der Werkzeugrevolver 62A relativ zu der Orientierung in **Fig. 2** mittels der Drehachse B um 90° gedreht. In **Fig. 2** ist die Revolverachse des Werkzeugrevolvers 62A parallel zu den Spindelachsen ausgerichtet und in **Fig. 3** ist die Revolverachse des Werkzeugrevolvers 62A senkrecht zu den Spindelachsen ausgerichtet. Weiterhin zeigt **Fig. 3** die Hydraulikkolben 52e im Gegensatz zu **Fig. 2** in einem ausgefahrenen Zustand.

Die Werkzeugmaschine gemäß **Fig. 2** bzw. **Fig. 3** umfasst weiterhin einen auf der zweiten Trägerseite TS2 des zweiten Trägerabschnitts 1b angeordneten dritten Werkzeugträgerschlitten 53 mit Teilschlitten 53a, 53b und 53c, wobei auf dem dritten Werkzeugträgerschlitten 53 (insbesondere auf dem Teilschlitten 53c) ein dritter Werkzeugträger 63 für Werkzeuge zur Bearbeitung des zweiten Werkstücks W2 an der zweiten Arbeitsspindel 21 angeordnet ist. In diesem Ausführungsbeispiel ist der dritte Werkzeugträger 63 als Radial-Werkzeugrevolver ausgebildet mit einem Werkzeugrevolverkopf 63A, dessen Revolverachse beispielhaft parallel mit der Spindelachse der zweiten Arbeitsspindel 22 ausgerichtet ist.

Der erste Werkzeugträgerschlitten 51 und der dritte Werkzeugträgerschlitten 53 sind in Richtung Z1, Z3 auf den Führungen 72a auf der zweiten Trägerseite TS2 geführt und sind parallel zu den Spindelachsen verfahrbar. Hierfür sind die in Richtung Z1, Z3 parallel zu den Spindelachsen ausgerichteten Führungen 72a auf der zweiten Trägerseite TS2 angeordnet und erstrecken sich beispielhaft durchgängig von dem ersten Trägerabschnitt 1a über den mittleren Trägerabschnitt 1c zu dem zweiten Trägerabschnitt 1b.

Beispielhaft sind der erste Werkzeugträgerschlitten 51 und der dritte, Werkzeugträgerschlitten 53 als Doppel-Kreuzschlitten ausgebildet, bei denen jeweils drei aufeinander angeordnete relativ zueinander verfahrbare Teilschlitten 51a bis 51c bzw. 53a bis 53c vorgesehen sind. Die Teilschlitten 51c bzw. 53c werden hierbei von Führungen 73a bzw. 75a geführt. Der erste Werkzeugträger 61 ist bei dieser Ausführung in Richtung Z1 parallel zu den Spindelachsen sowie in zwei Richtungen X1 und Y1 verfahrbar, wobei die Richtungen X1 und Y1 jeweils quer zueinander als auch quer zu den Spindelachsen ausgerichtet sind.

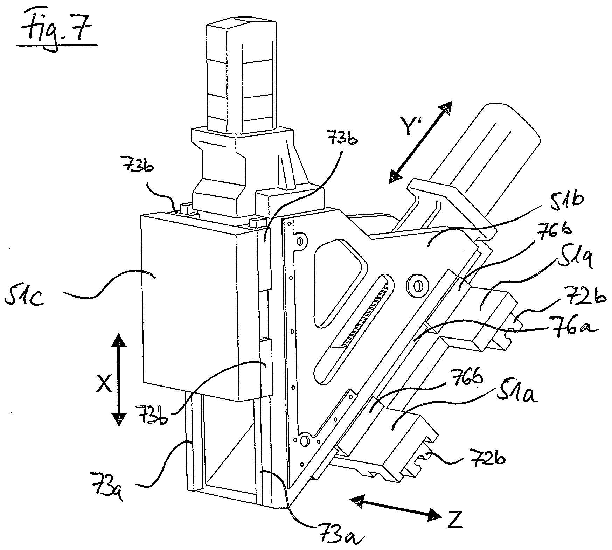

Der dritte Werkzeugträger 63 ist bei dieser Ausführung in Richtung Z3 parallel zu den Spindelachsen sowie in zwei Richtungen X3 und Y3 verfahrbar, wobei die Richtungen X3 und Y3 jeweils quer zueinander als auch quer zu den Spindelachsen ausgerichtet sind. Die mittleren Teilschlitten 51b bzw. 53b sind als Keilschlitten ausgebildet und somit sind die Richtungen Z1 und X1 sowie die Richtungen Z3 und X3 im Wesentlichen senkrecht zueinander ausgerichtet. Für eine genauere Beschreibung eines derartigen Doppel-Kreuzschlittens mit mittlerem Keilschlitten sei auf **Fig. 7** und die dazugehörige Beschreibung verwiesen.

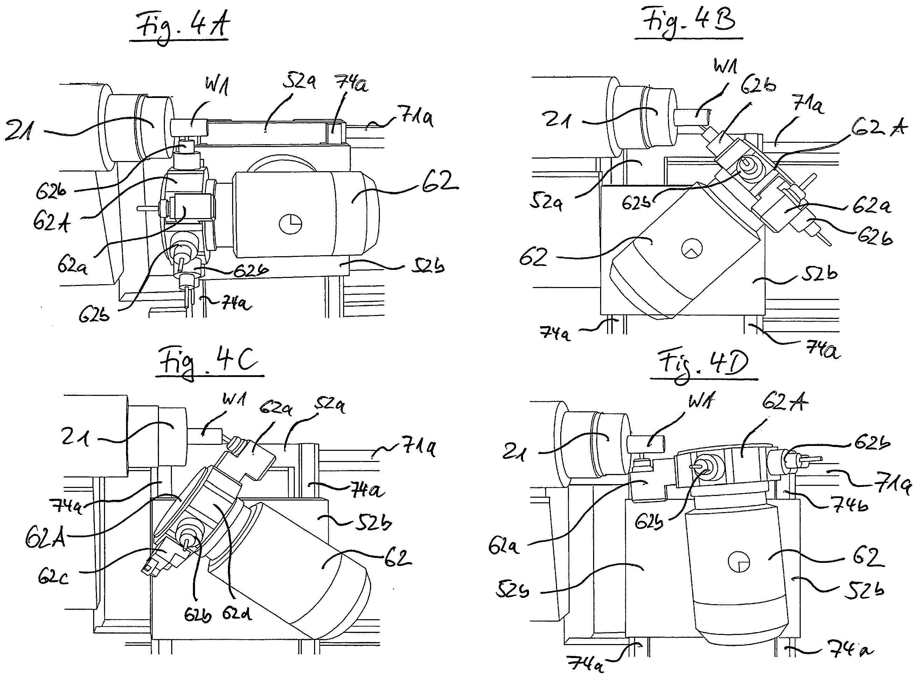

**Figs. 4A** bis **4D** zeigen beispielhaft schematische Darstellungen einer Detailansicht des zwischen den Spindelträgern angeordneten Werkzeugträgers 62 der Werkzeugmaschine gemäß dem ersten Ausführungsbeispiel der vorliegenden Erfindung aus **Fig. 2****.** In allen Darstellungen ist der Werkzeugträger 62 zur Bearbeitung eines an der ersten Arbeitsspindel 21 aufgenommenen Werkstücks W1 ausgerichtet. Durch Drehen der Drehachse B ist der Werkzeugträger 62 jeweils derart ausgerichtet, dass der Winkel der Revolverachse des Werkzeugrevolvers 62A zu den Spindelachsen in **Fig. 4A** 0°, in **Figs.** 4B und **4C** etwa 45° und in **Fig. 4D** etwa 90° beträgt. Die Revolverachse des Werkzeugrevolverkopfes 62A ist somit durch Drehen des zweiten Werkzeugträgers 62 um die Drehachse B quer zu den Spindelachsen ausrichtbar, parallel zu den Spindelachsen ausrichtbar und mit beliebigem Winkel zu den Spindelachsen ausrichtbar.

Wie bereits **Figs. 2** und **3** zu entnehmen war und in **Figs. 4A** bis **4D** deutlicher dargestellt ist, ist der Werkzeugrevolver des Werkzeugträgers 62 als Radialrevolver ausgebildet. Der Werkzeugrevolverkopf 62A umfasst umfänglich eine Mehrzahl von Aufnahmen 62d zum Aufnehmen von Werkzeugen 62c bzw. werkzeughaltenden Werkzeughaltern 62a und 62b, wobei die Aufnahmen insbesondere dazu eingerichtet sind, Radial-Werkzeughalter 62b aufzunehmen, die Werkzeuge radial relativ zur Revolverachse halten, und Axial-Werkzeughaltereinheiten 62a aufzunehmen, die Werkzeuge axial relativ zur Revolverachse halten.

Wie in **Figs. 4A** bis **4D** gezeigt ist der zweite Werkzeugträger 62 dazu eingerichtet, eine Aufnahme 62d bzw. an einer Werkzeugaufnahme aufgenommene Werkzeuge 62c bzw. Werkzeughalter 62a, 62b des Werkzeugrevolverkopfes 62A durch Rotation des Werkzeugrevolverkopfes 62A um die Revolverachse auf ein an einer der Arbeitsspindeln aufgenommenes Werkstück auszurichten, in **Figs. 4A** bis **4D** beispielhaft mit dem an der ersten Arbeitsspindel 21 aufgenommenen Werkstück W1.

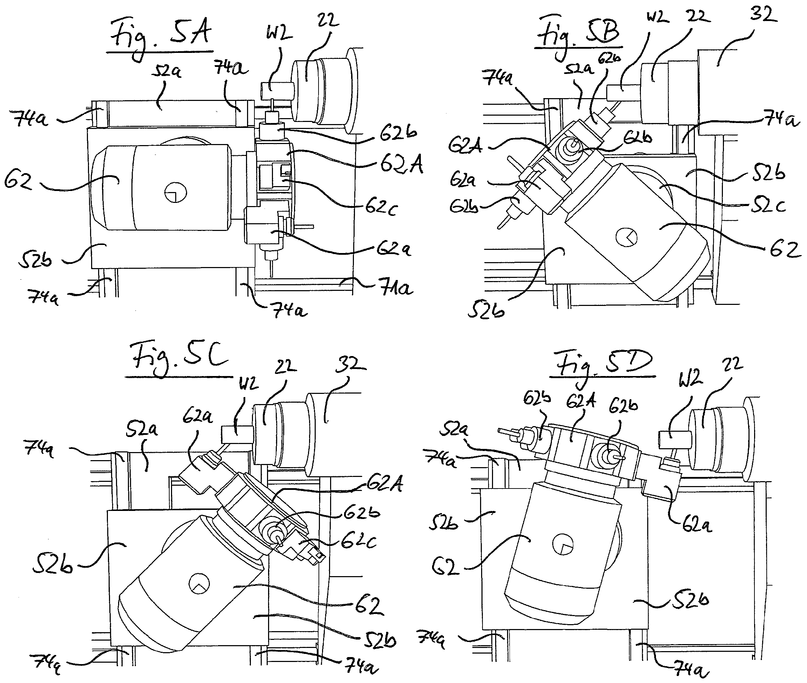

Die Aufnahmen 62d sind jeweils paarweise relativ zur Revolverachse auf gegenüberliegenden Seiten auf dem Werkzeugrevolverkopf 62A angeordnet, derart, dass jeweils eine Aufnahme mit der zweiten Arbeitsspindel 22 ausrichtbar ist, indem eine andere, gegenüberliegende Aufnahme mit der ersten Arbeitsspindel 21 ausgerichtet wird, wenn die Revolverachse quer, insbesondere senkrecht, zu den Spindelachsen ausgerichtet ist. Dies kann am Besten in **Fig. 4D** (oder analog in **Fig. 5D**) verstanden werden. Bei einer Revolverachse, die wie in **Fig. 4D** quer und im Wesentlichen senkrecht zu den Spindelachsen ausgerichtet ist, kann neben dem Werkzeughalter 62a auf der linken Seite, der auf das Werkstück W1 an der ersten Arbeitsspindel 21 ausgerichtet ist, auch noch ein auf der rechten Seite des Werkzeugrevolvers 62A angeordneter Werkzeughalter (z.B. der rechte Werkzeughalter 62b) auf ein Werkstück an der zweiten Arbeitsspindel 22 ausgerichtet werden.

Weiterhin zeigt **Fig. 4A****,** wie für das Werkstück W1 an der ersten Arbeitsspindel 21 mittels eines Radial-Werkzeughalters 62b (radial relativ zu der Revolverachse) eine radiale Bearbeitung erfolgen kann (radial relativ zu der Spindelachse), wenn die Revolverachse des Werkzeugrevolvers 62A im Wesentlichen parallel zu den Spindelachsen ausgerichtet ist. **Fig. 4D** zeigt dahingegen, wie für das Werkstück W1 an der ersten Arbeitsspindel 21 mittels eines Axial-Werkzeughalters 62a (axial relativ zu der Revolverachse) eine radiale Bearbeitung erfolgen kann (radial relativ zu der Spindelachse), wenn die Revolverachse des Werkzeugrevolvers 62A quer zu den Spindelachsen ausgerichtet ist.

Analog kann für das Werkstück W1 an der ersten Arbeitsspindel 21 mittels eines Radial-Werkzeughalters 62b (radial relativ zu der Revolverachse) eine axiale Bearbeitung erfolgen (axial relativ zu der Spindelachse), wenn die Revolverachse des Werkzeugrevolvers 62A quer zu den Spindelachsen ausgerichtet ist, und es kann für das Werkstück W1 an der ersten Arbeitsspindel 21 mittels eines Axial-Werkzeughalters 62a (axial relativ zu der Revolverachse) eine axiale Bearbeitung erfolgen (axial relativ zu der Spindelachse), wenn die Revolverachse des Werkzeugrevolvers 62A im Wesentlichen parallel zu den Spindelachsen ausgerichtet ist.

**Figs. 5A** bis **5D** zeigen beispielhaft weitere schematische Darstellungen einer Detailansicht des zwischen den Spindelträgern angeordneten Werkzeugträgers 62 der Werkzeugmaschine gemäß dem ersten Ausführungsbeispiel der vorliegenden Erfindung aus **Fig. 2****.** In allen Darstellungen ist der Werkzeugträger 62 zur Bearbeitung eines an der ersten Arbeitsspindel 22 aufgenommenen Werkstücks W2 ausgerichtet. Durch Drehen der Drehachse B ist der Werkzeugträger 62 jeweils derart ausgerichtet, dass der Winkel der Revolverachse des Werkzeugrevolvers 62A zu den Spindelachsen in **Fig. 5A** 0°, in **Figs. 5B** und **5C** etwa 45° und in **Fig. 5D** etwa 90° beträgt. Die Revolverachse des Werkzeugrevolverkopfes 62A ist somit durch Drehen des zweiten Werkzeugträgers 62 um die Drehachse B quer zu den Spindelachsen ausrichtbar, parallel zu den Spindelachsen ausrichtbar und mit beliebigem Winkel zu den Spindelachsen ausrichtbar.

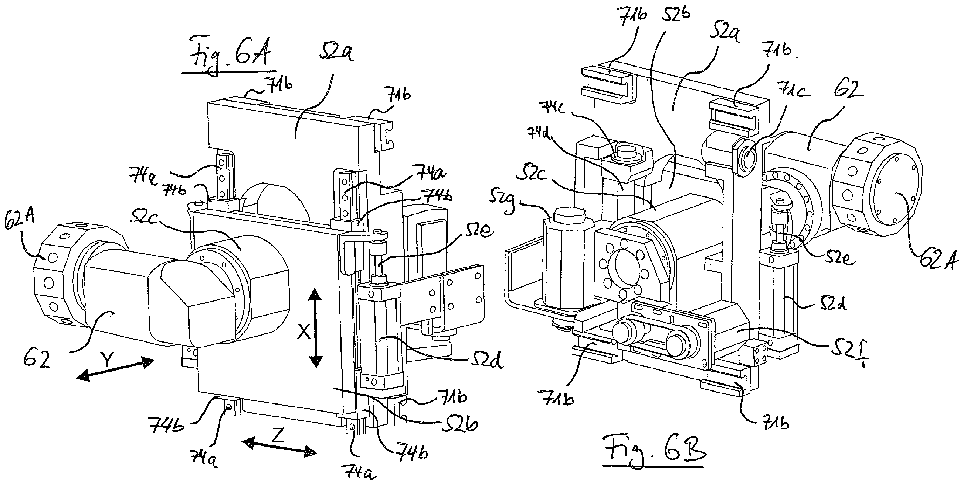

**Fig. 6A** zeigt beispielhaft eine schematische Darstellung einer perspektivischen Vorderansicht des zwischen den Spindelträgern 31 und 32 angeordneten Werkzeugträgerschlittens 52 der Werkzeugmaschine gemäß dem ersten Ausführungsbeispiel der vorliegenden Erfindung aus **Fig. 2** und **Fig. 6B** zeigt beispielhaft eine schematische Darstellung einer perspektivischen Rückansicht des zwischen den Spindelträgern 31 und 32 angeordneten Werkzeugträgerschlittens 52 der Werkzeugmaschine gemäß dem ersten Ausführungsbeispiel der vorliegenden Erfindung aus **Fig. 2****.**

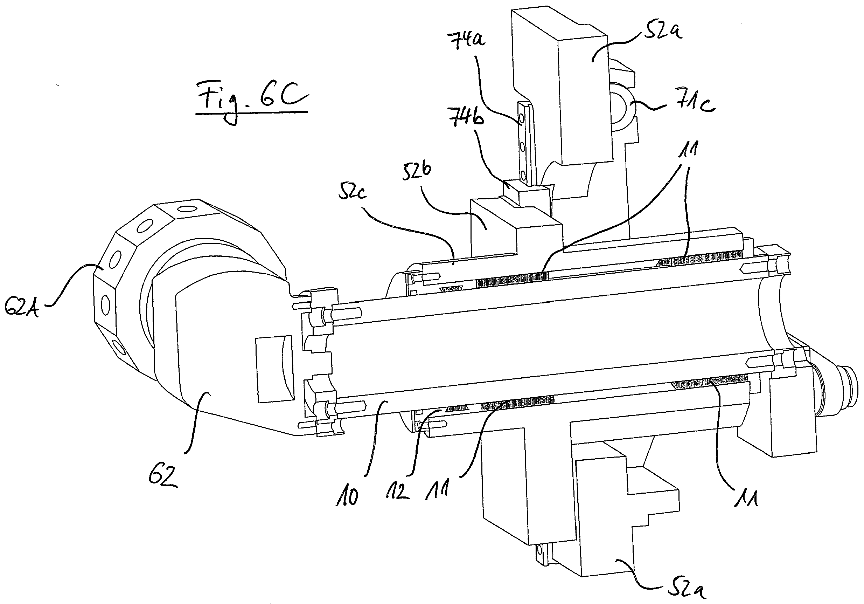

Der Werkzeugrevolverkopf 62A ist an dem Werkzeugträgerkörper 62 angeordnet, der über einen Abschnitt 52c (Pinolenträgerabschnitt; siehe **Fig. 6C**) mit dem Teilschlitten 52b verbunden ist. Teilschlitten 52b ist mittels vier an Ecken des Teilschlittens 52b angebrachten Führungselementen 74b auf den Führungsschienen 74a in X-Richtung geführt, wobei die Führungsschienen 74a an dem Teilschlitten 52a angebracht sind.

Mittels des Hydrauliksystems umfassend die Hydraulikzylinder 52d und die Hydraulikkolben 52e ist das Verfahren des Teilschlittens 52b relativ zum Teilschlitten 52 steuerbar. Die Hydraulikzylinder 52d sind seitlich an dem Teilschlitten 52a angebracht und die den Hydraulikzylindern 52d gegenüberliegenden Enden der Hydraulikkolben 52e sind seitlich mit dem Teilschlitten 52b verbunden.

An den vier Ecken des Teilschlittens 52a sind wiederrum Führungselemente 71b angebracht, mittels denen der Teilschlitten 52a in Z-Richtung parallel zu den Spindelachsen auf den Führungsschienen 71a geführt wird. Die Bezugszeichen 52f und 52g kennzeichnen Antriebe für die Achsen. Für die Z-Achsführung ist weiterhin optional ein Gleitlager 71c vorgesehen und für die X-Achsführung ist weiterhin ein Gleitlager 74c vorgesehen, in dem eine Führungswelle 74d in X-Richtung verfahrbar gelagert ist.

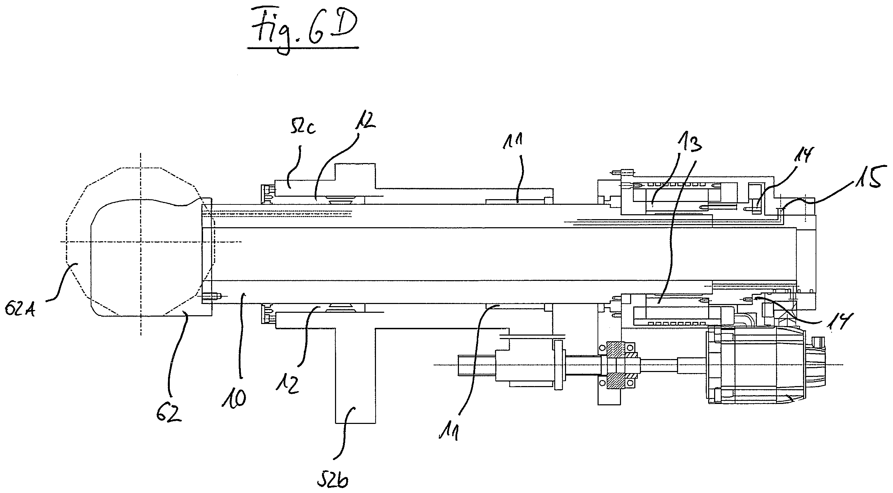

**Fig. 6C** zeigt beispielhaft eine schematische Darstellung einer perspektivischen Schnittansicht des zwischen den Spindelträgern 31 und 32 angeordneten Werkzeugträgers 62 der Werkzeugmaschine gemäß dem ersten Ausführungsbeispiel der vorliegenden Erfindung aus **Fig. 2** und **Fig. 6D** zeigt beispielhaft eine schematische Darstellung einer Schnittansicht des zwischen den Spindelträgern 31 und 32 angeordneten Werkzeugträgers 62 der Werkzeugmaschine gemäß dem ersten Ausführungsbeispiel der vorliegenden Erfindung aus **Fig. 2****.**

Der Werkzeugträgerkörper 62, an dem der Werkzeugrevolverkopf 62A angebracht ist, ist an einer Pinole 10 (Hohlwelle, kann jedoch in weiteren Ausführungsbeispielen auch als Vollwelle ausgebildet sein) angebracht, die in einem Hohlkörper des Pinolenträgerabschnitts 52c des Teilschlittens 52b in Y-Richtung verfahrbar und um die Drehachse B drehbar gelagert ist. Somit ist die Y-Achse des Werkzeugträgerschlittens 52 als Achse mit ein- bzw. ausfahrbarer Pinole 10 ausgebildet, bei der die Pinole 10 "teleskopartig" in den Hohlkörper des Pinolenträgerabschnitts 52c eingefahren werden kann bzw. aus dem Hohlkörper des Pinolenträgerabschnitts 52c herausgefahren werden kann.

Diese Bauweise ist vorteilhaft kompakter im Vergleich zu einer Doppelkreuzschlitten-Konstruktion, bei der ein weiterer Teilschlitten auf der Kreuzschlitten-Konstruktion aus den Teilschlitten 52a und 52b angeordnet ist. Für die Lagerung der Pinole 10 im Hohlkörper des Pinolenträgerabschnitts 52 des Teilschlittens 52b sind Lagerbuchsen 11 in dem Hohlkörper vorgesehen. Des Weiteren ist eine Hydraulikbremse 12 vorgesehen, um die Pinole 10 im Hohlkörper bei Bedarf fixieren zu können. Für den Antrieb der Drehachse B ist ein Torque-Motor 13 vorgesehen, der die Pinole 10 drehend antreibt um die Rotationsachse der Drehachse B. Für den Antrieb der Linearachse ist ein Hydrauliksystem vorgesehen mit einem Hydraulikanschluss 15. Die Lage der Drehachse B kann über einen Inkrementalgeber 14 überwacht werden.

**Fig. 7** zeigt beispielhaft eine schematische Darstellung einer perspektivischen Vorderansicht des auf der zweiten Trägerseite TS2 angeordneten Werkzeugträgers 51 der Werkzeugmaschine gemäß dem ersten Ausführungsbeispiel der vorliegenden Erfindung aus **Fig.** 2. Der Werkzeugträger 53 ist in **Figs. 2** und **3** baugleich mit dem Werkzeugträger 51.

Beispielhaft ist der erste Werkzeugträgerschlitten 51 als Doppel-Kreuzschlitten ausgebildet. Der erste Werkzeugträgerschlitten 51 umfasst hierbei den Teilschlitten 51a, der in Richtung Z1 parallel zu den Spindelachsen, d.h. in **Fig. 7** in Z-Richtung, verfahrbar angeordnet ist und von den Führungen 72a geführt wird. Hierfür sind an dem Teilschlitten 51a Führungselemente 72b vorgesehen. Weiterhin umfasst der erste Werkzeugträgerschlitten 51 einen auf dem Teilschlitten 51a angeordneten Teilschlitten 51b, der als Keilschlitten ausgebildet ist (der Winkel zwischen der dem Teilschlitten 51a zugewandten Seite des Keilschlittens 51b und der dem Teilschlitten 51c zugewandten Seite des Keilschlittens 51b bildet einen spitzen Winkel kleiner 90°). Auf der Oberseite des Teilschlittens 51a sind Führungselemente 76b angebracht für Führungsschienen 76a, die auf der Unterseite des Teilschlittens 51b angebracht sind und mittels derer der Teilschlitten 51b in Y'-Richtung verfahrbar ist, wobei die Y'-Richtung senkrecht zur parallel zu den Spindelachsen ausgerichteten Richtung Z ausgerichtet ist.

Auf der Vorderseite des Teilschlittens 51b sind Führungsschienen 73a angebracht, die sich in X-Richtung erstrecken, wobei die X-Richtung aufgrund der Keilform des Keilschlittens 51b zwar senkrecht zur Z-Richtung und quer jedoch nicht senkrecht zur Y'-Richtung ausgerichtet ist. Hierbei bilden die Unterseite und die Vorderseite des mittleren Keilschlittens 51b einen spitzen Winkel, um den schrägen (nicht-rechtwinkligen) Winkel zwischen der ersten Trägerseite TS1 und der zweiten Trägerseite TS2 auszugleichen, derart, dass die Vorderseite des Teilschlittens 51b parallel zur ersten Trägerseite TS1 ausgerichtet ist, und der Teilschlitten 51c parallel zur ersten Trägerseite verfahrbar ist. Insbesondere spannt eine erste Seite (Unterseite) des zweiten Teilschlittens 51b, die dem ersten Teilschlitten 51a auf der zweiten Trägerseite TS2 zugewandt ist, eine fünfte Ebene auf, die parallel zur zweiten Ebene der zweiten Trägerseite TS2 ausgerichtet ist, und eine zweite Seite (Vorderseite) des zweiten Teilschlittens 51b, die dem dritten Teilschlitten 51c zugewandt ist, spannt eine sechste Ebene auf, die parallel zur ersten Ebene der ersten Trägerseite TS1 ausgerichtet ist. Insbesondere kann der Teilschlitten 51c bei dieser einen Keilschlitten umfassenden Bauweise vorteilhaft parallel mit der X2-Richtung des zweiten Werkzeugträgers 52 verfahren werden.

In alternativen Ausführungen, in denen die erste und die zweite Trägerseiten TS1 und TS2 senkrecht zueinander ausgerichtet sind, ist der Winkel zwischen der ersten und der zweiten Seite des Teilschlittens 51b vorzugsweise im Wesentlichen 90° und in Ausführungen, in denen die erste und die zweite Trägerseiten TS1 und TS2 parallel zueinander ausgerichtet sind, sind die erste Seite und die zweite Seite des Teilschlittens 51b vorzugsweise parallel ausgerichtet. Somit kann auch in derartigen alternativen Ausführungen gewährleistet werden, dass der Teilschlitten 51c vorteilhaft parallel mit der X2-Richtung des zweiten Werkzeugträgers 52 verfahren werden kann.

### Zweites Ausführungsbeispiel

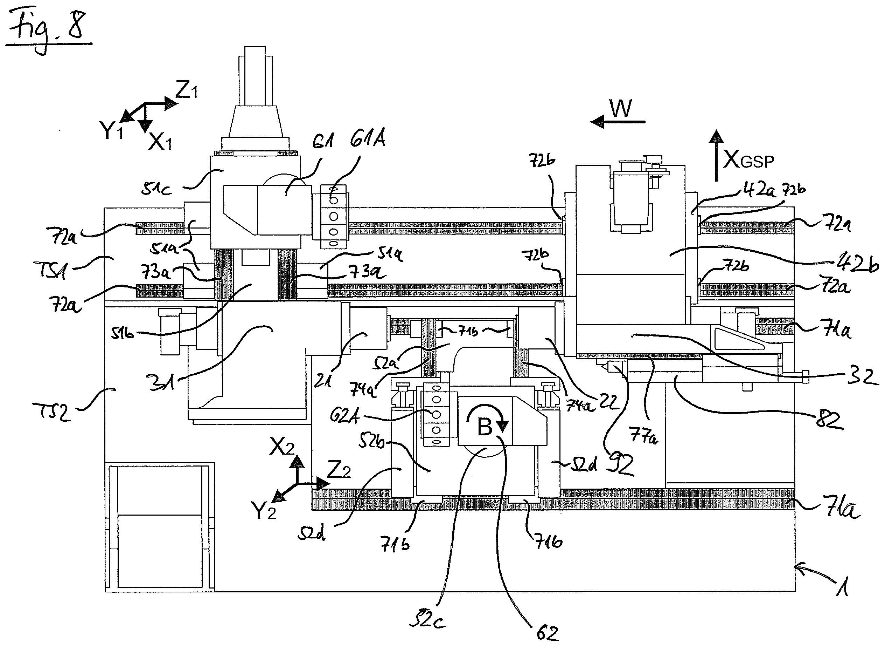

**Fig. 8** zeigt beispielhaft eine schematische Darstellung einer Vorderansicht einer Werkzeugmaschine gemäß einem zweiten Ausführungsbeispiel der vorliegenden Erfindung. Die Anordnung und der Aufbau des Maschinengestells 1, des ersten Werkzeugträgerschlittens 51 mit dem ersten Werkzeugträger 61 und des zweiten Werkzeugträgerschlittens 52 mit dem zweiten Werkzeugträger 62 ist im Vergleich zu dem ersten Ausführungsbeispiel gleich.

Jedoch ist kein dritter Werkzeugträgerschlitten 53 auf der zweiten Trägerseite TS2 angeordnet, sonder der Spindelträgerschlitten 42 ist auf der zweiten Trägerseite TS2 angeordnet und die zweite Arbeitsspindel 22 wird von dem Spindelträger 32 derart gehalten, dass es sich zur ersten Trägerseite TS1 hin erstreckt. Die erste und die zweite Arbeitsspindeln 21 und 22 sind in **Fig. 8** wieder koaxial ausgerichtet, jedoch ist die zweite Arbeitsspindel 22 zusätzlich zur parallel zu den Spindelachsen ausgerichteten Richtung W in einer Richtung XGSP quer, insbesondere senkrecht zu den Spindelachsen verfahrbar. Zu diesem Zweck ist der Spindelträgerschlitten 42 als Kreuzschlitten mit Teilschlitten 42a und 42b ausgebildet. Hierbei wird der Teilschlitten 42a auf den Führungsschienen 72a auf der zweiten Trägerseite TS2 geführt, auf denen auch der erste Werkzeugträgerschlitten 51, insbesondere Teilschlitten 51a, in Richtung Zi parallel zu den Spindelachsen verfahrbar geführt wird.

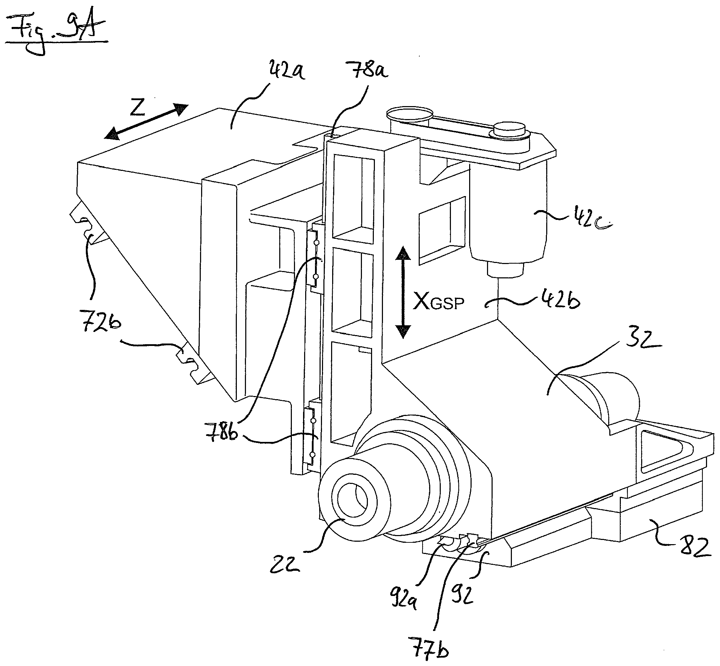

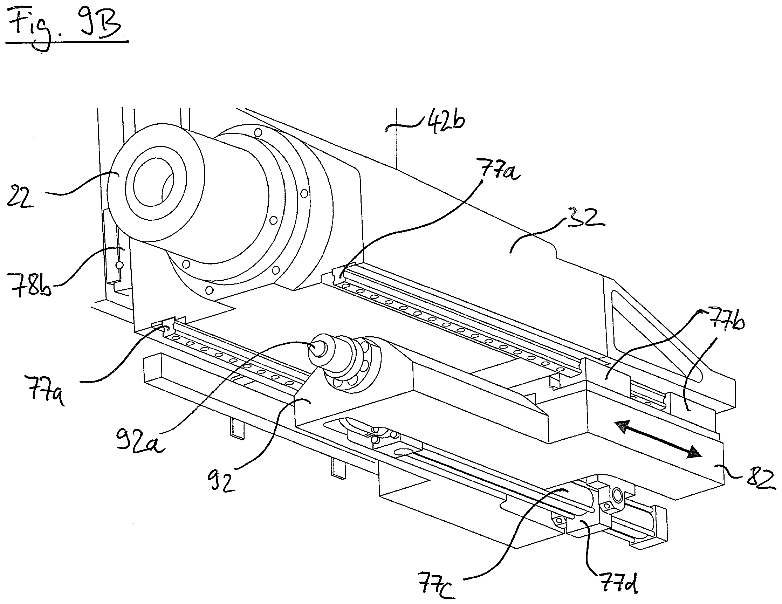

**Fig. 9A** zeigt beispielhaft eine schematische Darstellung einer perspektivischen Vorderansicht des Spindelträgerschlittens 42 der Werkzeugmaschine gemäß dem zweiten Ausführungsbeispiel der vorliegenden Erfindung aus **Fig. 8** und **Fig. 9B** zeigt beispielhaft eine schematische Darstellung einer perspektivischen Detailansicht des Spindelträgerschlittens 42 der Werkzeugmaschine gemäß dem zweiten Ausführungsbeispiel der vorliegenden Erfindung aus **Fig. 8****.**

Der erste Spindelträgerschlitten 42 ist als Kreuzschlitten ausgebildet und umfasst den ersten, in Richtung W parallel zu den Spindelachsen verfahrbaren Spindelträger-Teilschlitten 42a und den zweiten Spindelträger-Teilschlitten 42b, der in Richtung X_{GSP} quer, insbesondere senkrecht, zu den Spindelachsen verfahrbar auf dem ersten Spindelträger-Teilschlitten 42a angeordnet ist. Für die Verfahrbarkeit in Richtung X_{GSP} ist ein Achsantrieb 42c vorgesehen. Auf der Unterseite des ersten Spindelträger-Teilschlittens 42a sind Führungselemente 72b für die Führungsschienen 72a auf der zweiten Spindelträgerseite TS2 angebracht. Auf der Vorderseite des Spindelträger-Teilschlittens 42a sind Führungselemente 78b für Führungsschienen 78a angebracht, die auf der Rückseite des zweiten Spindelträger-Teilschlittens 42b angebracht sind und in X_{GSP}-Richtung ausgerichtet sind.

Hierbei bilden die Unterseite und die Vorderseite des ersten Spindelträger-Teilschlittens 42a einen Winkel, um den Winkel zwischen der ersten Trägerseite TS1 und der zweiten Trägerseite TS2 auszugleichen, derart, dass die Vorderseite des ersten Spindelträger-Teilschlittens 42a parallel zur ersten Trägerseite TS1 ausgerichtet ist, und der zweite Spindelträger-Teilschlitten 42b parallel zur ersten Trägerseite TS1 verfahrbar ist. Insbesondere spannt eine erste Seite (Unterseite) des ersten Spindelträger-Teilschlittens 42a, die der zweiten Trägerseite TS2 zugewandt ist, eine dritte Ebene auf, die parallel zur zweiten Ebene der zweiten Trägerseite TS2 ausgerichtet ist, und eine zweite Seite (Vorderseite) des ersten Spindelträger-Teilschlittens 42a, die dem zweiten Spindelträger-Teilschlitten 42b zugewandt ist, spannt eine vierte Ebene auf, die parallel zur ersten Ebene der ersten Trägerseite TS1 ausgerichtet ist. Hierbei ist der Spindelträger-Teilschlitten 42a ähnlich zu dem in **Fig. 7** gezeigten Keilschlitten 51b als Keilschlitten ausgebildet. Insbesondere kann der Teilschlitten 42b bei dieser einen Keilschlitten umfassenden Bauweise vorteilhaft parallel mit der X2-Richtung des zweiten Werkzeugträgers 52 verfahren werden.

In alternativen Ausführungen, in denen die erste und die zweite Trägerseiten TS1 und TS2 senkrecht zueinander ausgerichtet sind, ist der Winkel zwischen der ersten und der zweiten Seite des ersten Spindelträger-Teilschlittens 42a vorzugsweise im Wesentlichen 90° und in Ausführungen, in denen die erste und die zweite Trägerseiten TS1 und TS2 parallel zueinander ausgerichtet sind, sind die erste Seite und die zweite Seite des ersten Spindelträger-Teilschlittens 42a vorzugsweise parallel ausgerichtet.

Auf der Unterseite des zweiten Spindelträger-Teilschlittens 42b, die insbesondere senkrecht zur ersten Trägerseite TS1 ausgerichtet ist, sind Führungsschienen 77a angebracht, die in Richtung parallel zu den Spindelachsen ausgerichtet sind. Auf diesen Führungsschienen 77a wird ein Reitstockschlitten 82 geführt, an dem Führungselemente 77b für die Führungsschienen 77a angebracht sind. Ein Antriebssystem mit einem Lager 77d und einer Führungswelle 77c ist auf der Unterseite des Reitstockschlittens 82 angeordnet. Der Reitstockschlitten 82 trägt einen Reitstock 92 mit einer Zentrierspitze 92a.

Die Bauweise ist hierbei derart vorgesehen, dass die Richtung X_{GSP} parallel ausgerichtet ist zu einem Lot, welches die Spindelachsen und die Reitstockachse senkrecht schneidet, derart, dass durch Verfahren des ersten Spindelträgerschlittens 42, insbesondere des zweiten Spindelträger-Teilschlittens 42b in der Richtung X_{GSP} quer zu den Spindelachsen sowohl die Spindelachsen koaxial miteinander ausrichtbar sind (wie in **Fig. 8** gezeigt) als auch die Spindelachse der ersten Arbeitsspindel 21 koaxial mit der Reitstockachse des Reitstocks 92 ausrichtbar ist. Wenn die Reitstockachse koaxial mit der Spindelachse der ersten Arbeitsspindel 21 ausgerichtet ist, kann der Reitstock 92 für eine Reitstockanwendung unter der zweiten Arbeitsspindel 22 in Richtung parallel zu den Spindelachsen bzw. in Richtung auf die erste Arbeitsspindel 21 zukommend in den Bearbeitungsraum eingefahren werden.

### Drittes Ausführungsbeispiel

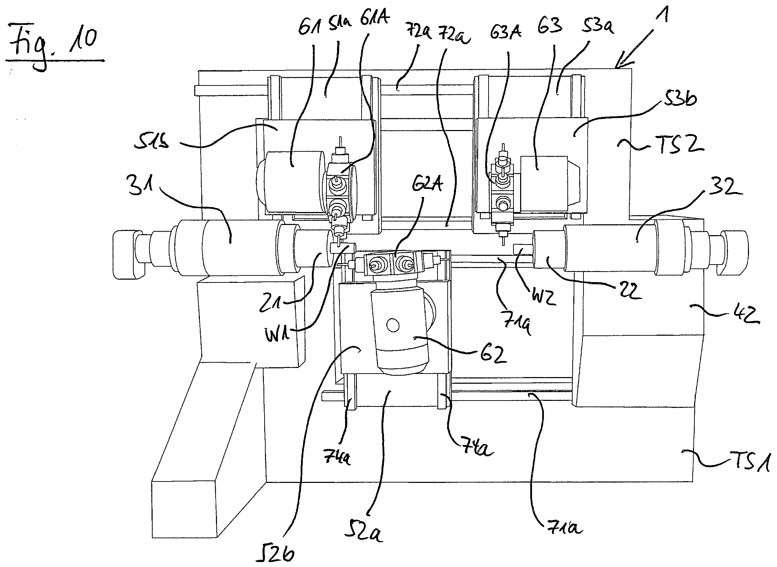

**Fig. 10** zeigt beispielhaft eine schematische Darstellung einer Vorderansicht einer Werkzeugmaschine gemäß einem dritten Ausführungsbeispiel der vorliegenden Erfindung. Hier ist der Aufbau des Maschinengestells 1 unterschiedlich zu dem vorstehend beschriebenen Maschinengestellaufbau. In **Fig. 10** sind alle Werkzeugträgerschlitten und die Spindeln vorteilhaft auf der Vorderseite des Maschinengestells 1 angeordnet und es ergibt sich eine hervorragende Einsehbarkeit von Vorne in den Bearbeitungsraum und auf die Werkzeugträgerschlitten und die Spindeln.

Die erste Trägerseite TS1, auf der in diesem Ausführungsbeispiel sowohl der zweite Werkzeugträgerschlitten 52 mit Teilschlitten 52a und 52b als auch der erste Spindelträgerschlitten 42 jeweils auf den Führungsschienen 71a geführt angeordnet sind, und die zweite Trägerseite TS2, auf der in diesem Ausführungsbeispiel sowohl der erste Werkzeugträgerschlitten 51 mit Teilschlitten 51a und 51b als auch der zweite Werkzeugträgerschlitten 53 mit Teilschlitten 53a und 53b jeweils auf den Führungsschienen 72a geführt angeordnet sind, sind parallel ausgerichtet. Der Aufbau des zweiten Werkzeugträgerschlittens 52 gleicht dem Aufbau aus den vorhergehenden Ausführungsbeispielen, wobei Details wie z.B. das Hydrauliksystem mit Zylindern 52d nicht dargestellt ist.

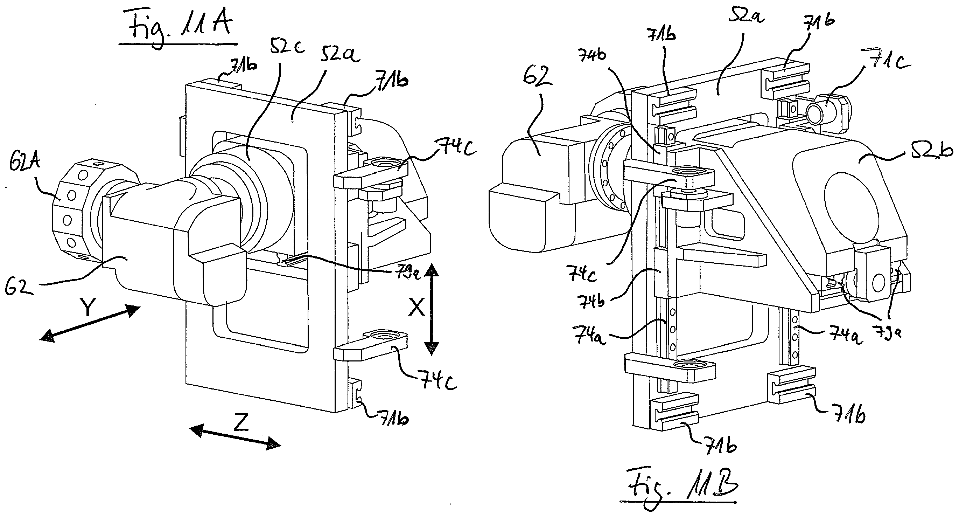

**Fig. 11A** zeigt beispielhaft eine schematische Darstellung einer perspektivischen Vorderansicht einer alternativen Ausführungsform des zwischen den Spindelträgern 31 und 32 angeordneten Werkzeugträgerschlittens 52 der Werkzeugmaschine und **Fig. 11B** zeigt beispielhaft eine schematische Darstellung einer perspektivischen Rückansicht der alternativen Ausführungsform des zwischen den Spindelträgern 31 und 32 angeordneten Werkzeugträgerschlittens 52 der Werkzeugmaschine aus **Fig. 11A****.** Diese Ausführung kann in allen der vorstehend beschriebenen Ausführungsbeispielen verwendet werden.

Der Werkzeugrevolverkopf 62A ist an dem Werkzeugträgerkörper 62 angeordnet, der mit einem Pinolenträgerteilschlitten 52c verbunden ist. Teilschlitten 52c ist mittels Führungselementen 79b auf den Führungsschienen 79a in Y-Richtung geführt, wobei die Führungsschienen 79a auf der Unterseite an dem Teilschlitten 52c angebracht sind. Die Führungselemente 79b sind auf der Oberseite des Teilschlittens 52b angebracht. Der Teilschlitten 52b ist mittels Führungselementen 74b auf den Führungsschienen 74a in X-Richtung geführt, wobei die Führungsschienen 74a auf der Rückseite an dem Teilschlitten 52a angebracht sind. Der Teilschlitten 52b ist auf der Rückseite des Teilschlittens 52a angeordnet und der den Werkzeugträger 62 tragende Teilschlitten 52c erstreckt sich von dem Teilschlitten 52b durch eine mittige Öffnung des Teilschlittens 52a nach Vorne zu dem Werkzeugträger 62, der sich vor dem Teilschlitten 52a befindet.

An den vier Ecken des Teilschlittens 52a sind wiederrum Führungselemente 71b angebracht, mittels denen der Teilschlitten 52a in Z-Richtung parallel zu den Spindelachsen auf den Führungsschienen 71a geführt wird. Für die Z-Achsführung ist weiterhin optional ein Gleitlager 72c vorgesehen und für die X-Achsführung sind weiterhin ein Gleitlager 74c vorgesehen.

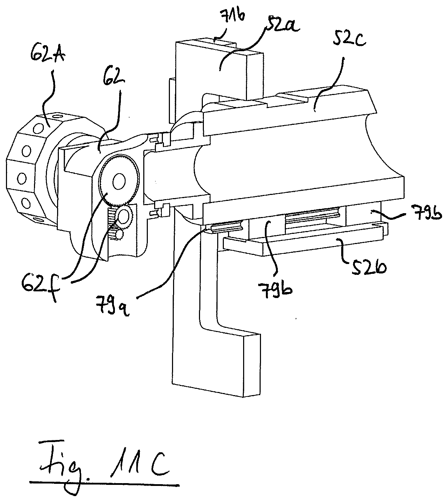

**Fig. 11C** zeigt beispielhaft eine schematische Darstellung einer perspektivischen Schnittansicht der alternativen Ausführungsform des Werkzeugträgers 62 aus **Fig. 11A**. Der Werkzeugträger 62 umfasst im Inneren ein Getriebe 62f zum Antreiben der Drehung des Revolverkopfes 62A um die Revolverachse zum Ausrichten der Werkzeuge bzw. Werkzeughalter. Der Werkzeugträger ist an dem Teilschlitten 52c angebracht. Auf der Unterseite des Teilschlittens 52c sind die Führungsschienen 79a angebracht, von der in der Schnittansicht nur eine zu sehen ist.

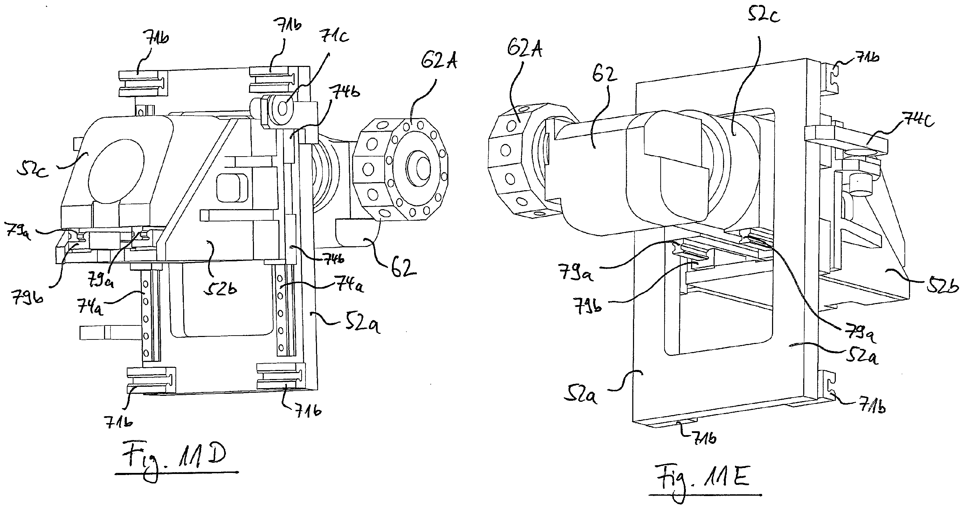

**Fig. 11D** zeigt beispielhaft eine schematische Darstellung einer weiteren perspektivischen Rückansicht der alternativen Ausführungsform des Werkzeugträgerschlittens 52 der Werkzeugmaschine aus **Fig. 11A** und **Fig. 11E** zeigt beispielhaft eine schematische Darstellung einer weiteren perspektivischen Vorderansicht der alternativen Ausführungsform des Werkzeugträgerschlittens 52 der Werkzeugmaschine aus **Fig. 11A****.**

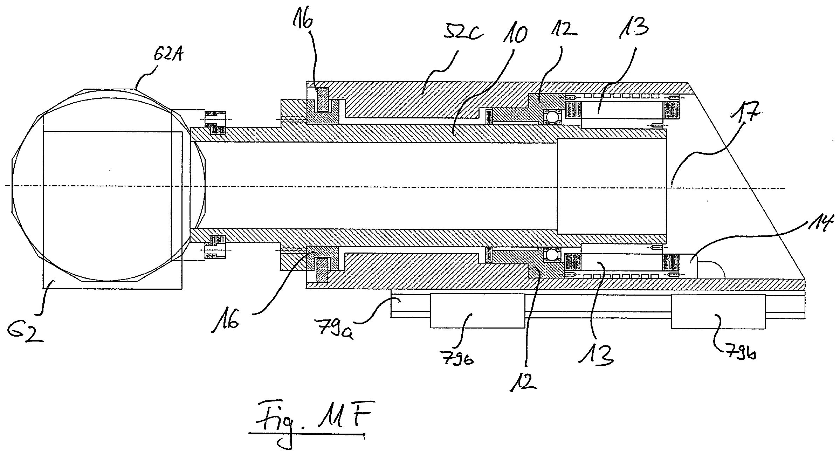

**Fig. 11F** zeigt beispielhaft eine schematische Darstellung einer Schnittansicht der alternativen Ausführungsform des Werkzeugträgers 62 und des Teilschlittens 52c aus **Fig. 11A****.** Genau wie in der vorher beschriebenen Ausführungsform ist der Werkzeugträger 62 an einem Ende einer Pinole 10 (Hohlwelle, kann in weiteren Ausführungsformen auch als Vollwelle ausgebildet sein) angebracht, die mit dem anderen Ende in einem Hohlkörper des Pinolenträgerabschnitts 52c gelagert ist, der in dieser Ausführungsform beispielhaft den Pinolenträgerteilschlitten 52c ausbildet.

Hierbei war die Pinole 10 in der vorhergehenden Ausführungsform sowohl drehbar als auch verfahrbar gelagert. Aufgrund der Führung durch die Führungsschlenen 79a auf der Unterseite des Teilschlittens 52c in dieser Ausführungsform, durch die die Verfahrbarkeit in Y-Richtung gewährleistet wird, ist die Pinole 10 in dieser Ausführungsform nur drehbar in dem Hohlkörper des Teilschlittens 52c gelagert, jedoch nicht in Y-Richtung verfahrbar. Zum Antrieb der Drehachse B, mittels der die Pinole 10 um die Rotationsachse der Drehachse B rotiert werden kann, ist ein Torque-Motor 13 vorgesehen. Die Lage der Drehachse B, d.h. die rotatorische Lage der Pinole 10 kann über einen Inkrementalgeber 14 überwacht werden. Eine Hydraulikbremse 12 ist dazu eingerichtet, die rotatorische Lage der Drehachse B bei Bedarf zu fixieren. Weiterhin ist für die Lagerung der Pinole 10 ein Präzisionslager 16 am Ende des Teilschlittens 52c angeordnet.

Zusammenfassend ermöglicht es die vorliegende Erfindung, eine Werkzeugmaschine, insbesondere Drehmaschine, bereitzustellen, derart dass eine effizientere Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger jedoch steifer Bauweise der Werkzeugmaschine und mit für den Bearbeiter bzw. Bediener der Werkzeugmaschine sehr gut einsehbarem Bearbeitungsraum.

### Bezugszeichen

- Maschinengestell: 1
- erste Trägerseite: TS1
- zweite Trägerseite: TS2
- erster Trägerabschnitt: 1a
- mittlerer Trägerabschnitt: 1c
- zweiter Trägerabschnitt: 1b
- Führungsschienen (auf erster Trägerseite): 71a
- Führungselemente (für Schienen 71a): 71b
- Führungsschienen (auf zweiter Trägerseite): 72a
- Führungselemente (für Schienen 72a): 72b
- Gleitlager: 72c
- erste Arbeitsspindel: 21
- erster Spindelträger: 31
- zweite Arbeitsspindel: 22
- zweiter Spindelträger: 32
- Spindelträgerschlitten: 42; 42a, 42b
- Achsantriebsgehäuse: 42c
- Führungsschienen (an Teilschlitten 42a): 78a
- Führungselemente (für Schienen 77a): 78b
- Führungsschienen (an Spindelträger 32): 77a
- Führungselemente (für Schienen 77a): 77b
- Reitstockschlitten: 82
- Reitstock: 92
- Zentrierspitze: 92a
- erster Werkzeugträgerschlitten: 51a, 51b, 51c
- erster Werkzeugträger: 61
- erster Werkzeugrevolver: 61A
- Führungsschienen (auf Teilschlitten 51b): 73a
- Führungselemente (für Schienen 73a): 73b
- Führungsschienen (auf Teilschlitten 51a): 76a
- Führungselemente (für Schienen 76a): 76b
- zweiter Werkzeugträgerschlitten: 52a, 52b, 52c
- Hydraulikzylinder: 52d
- Hydraulikkolben: 52e
- Achsantriebsgehäuse: 52f
- Achsantriebsgehäuse: 52g
- zweiter Werkzeugträger: 62
- zweiter Werkzeugrevolver: 62A
- Axial-Werkzeughaltereinheit: 62a
- Radial-Werkzeughaltereinheit: 62b
- Werkzeughalter: 62c
- Werkzeughalteraufnahme: 62d
- Getriebe: 62f
- Führungsschienen (auf Teilschlitten 52a): 74a
- Führungselemente (für Schienen 74a): 74b
- Gleitlager: 74c
- Führungswelle: 74d
- Führungsschienen (auf Teilschlitten 52c): 79a
- Führungselemente (für Schienen 79a): 79b
- Pinole: 10
- Lagerbuchse: 11
- Hydraulikbremse: 12
- Torque-Antrieb: 13
- Inkrementalgeber: 14
- Hydraulikanschluss: 15
- Präzisionslager: 16
- Rotationsachse: 17
- dritter Werkzeugträgerschlitten: 53a, 53b, 53c
- dritter Werkzeugträger: 63
- dritter Werkzeugrevolver: 63A
- Führungsschienen (auf Teilschlitten 53b): 75a
- Führungselemente (für Schienen 75a): 75b

## Patentansprüche

1. Werkzeugmaschine, umfassend:
- ein Maschinengestell (1) mit einer ersten Trägerseite (TS1) und einer zweiten Trägerseite (TS2), wobei das Maschinengestell (1) einen ersten Trägerabschnitt (1a), einen zweiten Trägerabschnitt (1b) und einen zwischen dem ersten und dem zweiten Trägerabschnitt angeordneten mittleren Trägerabschnitt (1c) aufweist;
- einen auf der ersten Trägerseite (TS1) des ersten Trägerabschnitts (1a) angeordneten ersten Spindelträger (31), der eine erste Arbeitsspindel (21) zur Aufnahme eines ersten Werkstücks (W1) hält;
- einen auf der zweiten Trägerseite (TS2) des ersten Trägerabschnitts (1a) angeordneten ersten Werkzeugträgerschlitten (51a, 51b, 51c; 53a; 53b; 53c), auf dem ein erster Werkzeugträger (61; 63) für Werkzeuge zur Bearbeitung des ersten Werkstücks (W1) angeordnet ist;
- einen auf der ersten oder zweiten Trägerseite des zweiten Trägerabschnitts (1b) angeordneten ersten Spindelträgerschlitten (42; 42a, 42b), auf dem ein zweiter Spindelträger (32) angeordnet ist, der eine der ersten Arbeitsspindel (21) zugewandte zweite Arbeitsspindel (22) zur Aufnahme eines zweiten Werkstücks (W2) hält, wobei die Spindelachse der zweiten Arbeitsspindel (22) parallel oder koaxial zu der Spindelachse der ersten Arbeitsspindel (21) ausgerichtet ist, und wobei der zweite Spindelträger (32) in Richtung (W) parallel zu den Spindelachsen verfahrbar ist; und
- einen auf der ersten Trägerseite (TS1) des Mittelabschnitts (1c) angeordneten zweiten Werkzeugträgerschlitten (52a, 52b, 52c), auf dem ein zweiter Werkzeugträger (62) für Werkzeuge zur Bearbeitung des ersten oder zweiten Werkstücks (W1; W2) angeordnet ist,
wobei der zweite Werkzeugträgerschlitten (52a, 52b, 52c) auf der ersten Trägerseite (TS1) zwischen dem ersten Spindelträger (31) und dem zweiten Spindelträger (32) angeordnet ist und als Kreuzschlitten ausgebildet ist, und der zweite Werkzeugträger (62) in einer ersten Richtung (Z2) parallel zu den Spindelachsen der ersten und zweiten Arbeitsspindeln (21, 22) und weiterhin in einer zweiten Richtung (X2) quer oder senkrecht zu den Spindelachsen der ersten und zweiten Arbeitsspindeln (21, 22) verfahrbar ist,
**dadurch gekennzeichnet, dass**
der zweite Werkzeugträgerschlitten (52a, 52b, 52c) weiterhin eine Drehachse (B) umfasst, mittels der der zweite Werkzeugträger (62) um eine quer zu den Spindelachsen ausgerichtete Rotationsachse der Drehachse drehend steuerbar ist, und
der zweite Werkzeugträger (62) einen Werkzeugrevolver umfasst, der einen um eine quer zur Rotationsachse ausgerichtete Revolverachse drehbar gelagerten, werkzeugtragenden Werkzeugrevolverkopf (62A) aufweist, der relativ zu der Rotationsachse der Drehachse (B) auf dem zweiten Werkzeugträger (62) versetzt angeordnet ist.

2. Werkzeugmaschine nach Anspruch 1, **dadurch gekennzeichnet, dass**
der Werkzeugrevolverkopf (62A) eine Mehrzahl von Aufnahmen (62d) zum Aufnehmen von Werkzeugen oder werkzeughaltenden Werkzeughaltern (62a, 62b, 62c) aufweist, wobei die Aufnahmen dazu eingerichtet sind, Radial-Werkzeughalter (62b) aufzunehmen, die Werkzeuge radial relativ zur Revolverachse halten, und Axial-Werkzeughalter (62a) aufzunehmen, die Werkzeuge axial relativ zur Revolverachse halten.

3. Werkzeugmaschine nach Anspruch 2, **dadurch gekennzeichnet, dass**
der zweite Werkzeugträger (62) dazu eingerichtet ist, eine Aufnahme (62d) des Werkzeugrevolverkopfes (62A) durch Rotation des Werkzeugrevolverkopfes (62A) um die Revolverachse auf ein an einer der Arbeitsspindeln aufgenommenes Werkstück auszurichten,
wobei die Aufnahmen jeweils paarweise relativ zur Revolverachse auf gegenüberliegenden Seiten auf dem Werkzeugrevolverkopf (62A) angeordnet sind, derart, dass jeweils eine Aufnahme mit der zweiten Arbeitsspindel (22) ausrichtbar ist, indem eine andere, gegenüberliegende Aufnahme mit der ersten Arbeitsspindel (21) ausgerichtet wird, wenn die Revolverachse quer oder senkrecht zu den Spindelachsen ausgerichtet ist.

4. Werkzeugmaschine nach einem der vorhergehenden Ansprüche, **dadurch gekennzeichnet, dass**
der zweite Werkzeugträgerschlitten (52a, 52b, 52c) eine Linearachse (52c, 10) umfasst, mittels der der zweite Werkzeugträger (62) weiterhin in einer dritten Richtung (Y2) quer oder senkrecht zu den Spindelachsen der ersten und zweiten Arbeitsspindeln (21, 22) und quer oder senkrecht zu der zweiten Richtung (X2) verfahrbar ist.

5. Werkzeugmaschine nach Anspruch 4, **dadurch gekennzeichnet, dass**
die Linearachse (52c, 10) des zweiten Werkzeugträgerschlittens (52) eine ein- und ausfahrbare Pinole (10) umfasst, die verfahrbar in einem Pinolenträgerabschnitt (52c) des zweiten Werkzeugträgerschlittens (52a, 52b, 52c) gelagert ist,
wobei die Pinole (10) weiterhin drehbar in dem Pinolenträgerabschnitt (52c) des zweiten Werkzeugträgerschlittens (52a, 52b, 52c) gelagert ist und die Drehachse B des zweiten Werkzeugträgers (62) ausbildet.

6. Werkzeugmaschine nach einem der vorhergehenden Ansprüche, **dadurch gekennzeichnet, dass**
der erste Spindelträgerschlitten (42) auf der ersten Trägerseite (TS1) angeordnet ist, wobei parallel zu den Spindelachsen ausgerichtete Führungen (71a) auf der ersten Trägerseite (TS1) des mittleren Trägerabschnitts (1c) und des zweiten Trägerabschnitts (1b) angeordnet sind, auf denen der zweite Werkzeugträgerschlitten (52a, 52b, 52c) und der erste Spindelträgerschlitten (42) in Richtung (Z2, W) parallel zu den Spindelachsen verfahrbar geführt sind.

7. Werkzeugmaschine nach Anspruch 6, **gekennzeichnet, durch**
einen auf der zweiten Trägerseite (TS2) des zweiten Trägerabschnitts (1b) angeordneten dritten Werkzeugträgerschlitten (53a, 53b, 53c), auf dem ein dritter Werkzeugträger (63) für Werkzeuge zur Bearbeitung des zweiten Werkstücks (W2) angeordnet ist,
wobei der erste Werkzeugträgerschlitten (51a, 51b, 51c) und der dritte Werkzeugträgerschlitten (53a, 53b, 53c) in Richtung (Z1, Z3) parallel zu den Spindelachsen verfahrbar sind.

8. Werkzeugmaschine nach Anspruch 7, **dadurch gekennzeichnet, dass**
in Richtung (Z1, Z3) parallel zu den Spindelachsen ausgerichtete Führungen (72a) auf der zweiten Trägerseite (TS2) angeordnet sind, die sich von dem ersten Trägerabschnitt (1a) über den mittleren Trägerabschnitt (1c) zu dem zweiten Trägerabschnitt (1b) erstrecken, und auf denen der erste Werkzeugträgerschlitten (51a, 51b, 51c) und der dritte Werkzeugträgerschlitten (53a, 53b, 53c) in Richtung (Z1, Z3) parallel zu den Spindelachsen verfahrbar geführt sind.

9. Werkzeugmaschine nach einem der Ansprüche 1 bis 5, **dadurch gekennzeichnet, dass**
der erste Spindelträgerschlitten (42a, 42b) auf der zweiten Trägerseite (TS2) angeordnet ist, wobei in Richtung (Z1, W) parallel zu den Spindelachsen ausgerichtete Führungen (72a) auf der zweiten Trägerseite (TS2) angeordnet sind, die sich von dem ersten Trägerabschnitt (1a) über den mittleren Trägerabschnitt (1c) zu dem zweiten Trägerabschnitt (1b) erstrecken, auf denen der erste Werkzeugträgerschlitten (51a, 51b, 51c) und der erste Spindelträgerschlitten (42) in Richtung (Z1, W) parallel zu den Spindelachsen verfahrbar geführt sind.

10. Werkzeugmaschine nach Anspruch 9, **dadurch gekennzeichnet, dass**
der erste Spindelträgerschlitten als Kreuzschlitten ausgebildet ist und einen ersten, in Richtung (W) parallel zu den Spindelachsen verfahrbaren Spindelträger-Teilschlitten (42a) und einen zweiten Spindelträger-Teilschlitten (42b) umfasst, der in Richtung (X_{GSP}) quer oder senkrecht zu den Spindelachsen verfahrbar auf dem ersten Spindelträger-Teilschlitten (42a) angeordnet ist.

11. Werkzeugmaschine nach einem der vorhergehenden Ansprüche, **dadurch gekennzeichnet, dass**
der erste Werkzeugträgerschlitten (51a, 51b, 51c) und/oder ein dritter, auf der zweiten Trägerseite (TS2) angeordneter Werkzeugträgerschlitten (53a, 53b, 53c) als Doppel-Kreuzschlitten (51a, 51b, 51c; 53a, 53b, 53c) ausgebildet sind, wobei ein erster Teilschlitten (51a; 53a) in Richtung (Z1; Z3) parallel zu den Spindelachsen verfahrbar angeordnet ist, ein zweiter Teilschlitten (51b; 53b) in Richtung (Y1; Y3) quer oder senkrecht zu den Spindelachsen verfahrbar angeordnet ist, und ein dritter Teilschlitten (51c; 53c) in Richtung (X1; X3) quer oder senkrecht zu den Spindelachsen und quer zu der Verfahrrichtung (Y1; Y3) des zweiten Teilschlittens (51b; 53b) verfahrbar angeordnet ist.

12. Werkzeugmaschine nach einem der vorhergehenden Ansprüche, **dadurch gekennzeichnet, dass**
die erste Trägerseite (TS1) eine erste Ebene aufspannt und die zweite Trägerseite (TS2) eine zweite Ebene aufspannt, wobei die erste Ebene parallel oder senkrecht zur zweiten Ebene ausgerichtet ist; oder
die erste Trägerseite (TS1) eine erste Ebene aufspannt und die zweite Trägerseite (TS2) eine zweite Ebene aufspannt, wobei die erste Ebene schräg zur zweiten Ebene ausgerichtet ist.

13. Werkzeugmaschine nach Anspruch 11, **dadurch gekennzeichnet, dass**
die erste Trägerseite (TS1) eine erste Ebene aufspannt und die zweite Trägerseite (TS2) eine zweite Ebene aufspannt, wobei die erste Ebene schräg zur zweiten Ebene ausgerichtet ist,
wobei eine erste Seite des zweiten Teilschlittens (51b; 53b), die dem ersten Teilschlitten (51a; 53a) auf der zweiten Trägerseite (TS2) zugewandt ist, eine fünfte Ebene aufspannt, die parallel zur zweiten Ebene ausgerichtet ist, und eine zweite Seite des zweiten Teilschlittens (51b; 53b), die dem dritten Teilschlitten (51c; 53c) zugewandt ist, eine sechste Ebene aufspannt, die parallel zur ersten Ebene ausgerichtet ist, wobei der zweite Teilschlitten (51b; 53b) als Keilschlitten ausgebildet ist, derart, dass der dritte Teilschlitten (51c; 53c) parallel zu der ersten Ebene auf dem zweiten Teilschlitten (51b; 53b) verfahrbar angeordnet ist.

14. Werkzeugmaschine nach Anspruch 12 oder 13, **dadurch gekennzeichnet, dass**
die Rotationsachse der Drehachse (B) im Wesentlichen senkrecht zur ersten Ebene ausgerichtet ist.

## Claims

1. A machine tool comprising:
- a machine frame (1) having a first carrier side (TS1) and a second carrier side (TS2), wherein said machine frame (1) includes a first carrier portion (1a), a second carrier portion (1b) and a middle carrier portion (1c) which is arranged between said first and second carrier portions;
- a first spindle carrier (31) which is arranged on said first carrier side (TS1) of said first carrier portion (1a) and which holds a first work spindle (21) for receiving a first workpiece (W1);
- a first tool carrier slide (51a, 51b, 51c; 53a, 53b, 53c) which is arranged on said second carrier side (TS2) of said first carrier portion (1a) and on which a first tool carrier for tools (61, 63) for machining said first workpiece (W1) is arranged;
- a first spindle carrier slide (42, 42a, 42b) which is arranged on the first or second carrier side of said second carrier portion (1b) and on which a second spindle carrier (32) is arranged which holds a second work spindle (22) facing said first work spindle (21) for receiving a second workpiece (W2), wherein the spindle axis of said second work spindle (22) is parallel or coaxial to the spindle axis of said first work spindle (21) and wherein said second spindle carrier (32) is movable in a direction (W) parallel to the spindle axes; and
- a second tool carrier slide (52a, 52b, 52c) which is arranged on said first carrier side (TS1) of said middle portion (1c) and on which a second tool carrier (62) for tools for machining said first or second workpiece (W1, W2) is arranged,
wherein said second tool carrier slide (52a, 52b, 52c) is arranged on said first carrier (TS1) side between said first spindle carrier (31) and said second spindle carrier (32) and is formed as a compound slide, and said second tool carrier (62) is movable in a first direction (Z2) parallel to the spindle axes of said first and second work spindles (21, 22) and in a second direction (X2) transversal or perpendicular to the spindle axes of said first and second work spindles (21,22),
**characterized in that**
said second tool carrier slide (52a, 52b, 52c) further comprises a spin axis (B), by means of which said second tool carrier (62) can be controlled to rotate about an axis of rotation of the spin axis which is transversal to the spindle axes, and
said second tool carrier (62) comprises a tool turret which has a tool-carrying tool turret head (62A) which is rotatably mounted about a turret axis transverse to the axis of rotation and which is displaced relative to the axis of rotation of the spin axis (B) on said second tool carrier (62).

2. The machine tool of claim 1 **characterized in that**
said tool turret (62A) includes a plurality of supports (62d) for receiving tools or tool carrying tool carriers (62a, 62b, 62c), wherein said supports are configured to receive radial tool carriers (62b) which hold tools radially relative to the turret axis and to receive axial tool carriers (62a) which hold tools axially relative to the turret axis.

3. The machine tool of claim 2 **characterized in that**
said second tool carrier (62) is configured to align a support (62d) of said tool turret head (62A) with a workpiece received at one of the work spindles by rotating said tool turret head (62A) about the turret axis,
wherein said supports are each arranged pairwise relative to the turret axis on opposite sites on said tool turret head (62A) such that one of said supports can be aligned with said second work spindle (22) by aligning another opposite support with said first work spindle (21), if the turret axis is oriented transversally or perpendicularly to the spindle axes.

4. The machine tool of any of the preceding claims **characterized in that**
said second tool carrier slide (52a, 52b, 52c) comprises a linear axis (52c, 10) by means of which said second tool carrier (62) is also movable in a third direction (Y2) transversal or perpendicular to the spindle axes of said first and second work spindles (21, 22) and transversal or perpendicular to said second direction (X2).

5. The machine tool of claim 4 **characterized in that**
said linear axis (52c, 10) of said second tool carrier slide (52) comprises a retractable and extendable quill (10) which is supported movably in a quill carrier portion (52c) of said second tool carrier slide (52a, 52b, 52c),
wherein said quill (10) is further supported rotatably in said quill carrier portion (52c) of said second tool carrier slide (52a, 52b, 52c) and forms the spin axis B of said second tool carrier (62).

6. The machine tool according to one of the preceding claims **characterized in that**
said first spindle carrier slide (42) is arranged on said first carrier side (TS1) wherein guideways (71 a) parallel to the spindle axes, on which said second tool carrier slide (52a, 52b, 52c) and said first spindle carrier slide (42) are guided so as to be movable in a direction (Z2, W) parallel to the spindle axes, are arranged on said first carrier side (TS1) of said middle carrier portion (1c) and of said second carrier portion (1b).

7. The machine tool of claim 6 **characterized in that**
said machine tool further comprises a third tool carrier slide (53a, 53b, 53c) which is arranged on said second carrier side (TS2) of said second carrier portion (1b) and on which a third tool carrier (63) for tools for machining said second workpiece (W2) is arranged,
wherein said first tool carrier slide (51a, 51b, 51c) and said third tool carrier slide (53a, 53b, 53c) are movable in a direction parallel to the spindle axes.

8. The machine tool of claim 7 **characterized in that**
guideways (72a) oriented in a direction (Z1, Z3) parallel to the spindle axes, which extend from said first carrier portion (1a) via said middle carrier portion (1c) to said second carrier portion (1b) and on which said first tool carrier slide (51a, 51b, 51c) and said third tool carrier slide (53a, 53b, 53c) are guided so as to be movable in a direction (Z1, Z3) parallel to the spindle axes, are arranged on said second carrier side (TS2).

9. The machine tool according to one of the claims 1 to 5 **characterized in that**
said first spindle carrier slide (42a, 42b) is arranged on said second carrier side (TS2), wherein guideways (72a) oriented in a direction (Z1, W) parallel to the spindle axes, which extend from said first carrier portion (1a) via said middle carrier portion (1c) to said second carrier portion (1b) and on which said first tool carrier slide (51a, 51b, 51c) and said first spindle carrier slide (42) are guided so as to be movable in a direction (Z1, W) parallel to the spindle axes, are arranged on said second carrier side (TS2).

10. The machine tool of claim 9 **characterized in that**
said first spindle carrier slide is formed as a compound slide and comprises a first spindle carrier partial slide (42a) which is movable in a direction (W) parallel to the spindle axes and a second spindle carrier partial slide (42b) which is arranged on said first spindle carrier partial slide (42a) so as to be movable in a direction (X_{GSP}) transversal or perpendicular to the spindle axes.

11. The machine tool of one the preceding claims **characterized in that**
said first tool carrier slide (51a, 51b, 51c) and/or a third tool carrier slide (53a, 53b, 53c) arranged on said second carrier side (TS2) are formed as a double compound slide (51 a, 51b, 51c, 53a, 53b, 53c), wherein a first partial slide (51 a, 53a) is arranged so as to be movable in a direction (Z1, Z3) parallel to the spindle axes, a second partial slide (51b, 53b) is arranged so as to be movable in a direction (Y1, Y3) transversal or perpendicular to the spindle axes, and a third partial slide (51c, 53c) is arranged so as to be movable in a direction (X1, X3) transversal or perpendicular to the spindle axes and transversal to the moving direction (Y1, Y3) of said second partial slide (51b, 53b).

12. The machine tool of one of the preceding claims **characterized in that**
said first carrier side (TS1) defines a first plane and said second carrier side (TS2) defines a second plane, wherein the first plane is parallel or perpendicular to the second plane, or
said first carrier side (TS1) defines a first plane and said second carrier side (TS2) defines a second plane, wherein said first plane is inclined relative to the second plane.

13. The machine tool of claim 11 **characterized in that**
said first carrier side (TS1) defines a first plane and said second carrier side (TS2) defines a second plane, wherein the first plane is inclined relative to the second plane,
wherein a first side of said second partial slide (51b, 53b), which faces said first partial slide (51a, 53a) on said second carrier side (TS2), defines a fifth plane which is parallel to the second plane, and a second side of said second partial slide (51b, 53b), which faces said third partial slide (51c, 53c), defines a sixth plane which is parallel to the first plane, wherein said second partial slide (51b, 53b) is formed as a wedge-type slide such that said third partial slide (51c, 53c) is arranged on said second partial slide (51b, 53b) so as to be movable in parallel to the first plane.

14. The machine tool of claim 12 or 13 **characterized in that**
the axis of rotation of the spin axis (B) is substantially perpendicular to the first plane.

## Revendications

1. Machine-outil, comportant :
- un bâti de machine (1) comprenant un premier côté de support (TS1) et un second côté de support (TS2), le bâti de machine (1) comprenant une première portion de support (1a), une seconde portion de support (1b) et une portion de support centrale (1c) agencée entre les première et seconde portions de support ;
- un premier porte-broche (31) agencé sur le premier côté de support (TS1) de la première portion de support (1a), qui porte une première broche de travail (21) destinée à recevoir une première pièce à oeuvrer (W1) ;
- un premier chariot porte-outil (51 a, 51 b, 51 c ; 53a ; 53b ; 53c) agencé sur le second côté de support (TS2) de la première portion de support (1a), sur lequel est agencé un premier porte-outil (61 ; 63) pour des outils destinés à usiner la première pièce à oeuvrer (W1) ;
- un premier chariot porte-broche (42 ; 42a, 42b) agencé sur le premier ou le second côté de support de la seconde portion de support (1 b), sur lequel est agencé un second porte-broche (32) qui porte une seconde broche de travail (22) tournée vers la première broche de travail (21) et destinée à recevoir une seconde pièce à oeuvrer (W2), l'axe de la seconde broche de travail (22) étant orienté parallèlement ou coaxialement à l'axe de la première broche de travail (21), et le second porte-broche (32) étant mobile en direction (W) parallèlement aux axes des broches,
- un second chariot porte-outil (52a, 52b, 52c) agencé sur le premier côté de support (TS1) de la portion centrale (1c), sur lequel est agencé un second porte-outil (62) pour des outils destinés à usiner la première ou la seconde pièce à oeuvrer (W1 ; W2),
dans laquelle le second chariot porte-outil (52a, 52b, 52c) est agencé sur le premier côté de support (TS1) entre le premier porte-broche (31) et le second porte-broche (32) et est réalisé sous forme de chariot en croix, et
le second porte-outil (62) est mobile dans une première direction (Z2) parallèlement aux axes des première et seconde broches de travail (21, 22) et en outre dans une seconde direction (X2) transversalement ou perpendiculairement aux axes des première et seconde broches de travail (21,22),
**caractérisée en ce que**
le second chariot porte-outil (52a, 52b, 52c) comprend en outre un axe tournant (B) au moyen duquel le second porte-outil (62) est pilotable en rotation autour d'un axe de rotation de l'axe tournant orienté transversalement aux axes des broches, et
le second porte-outil (62) comprend un revolver qui présente une tourelle (62A) montée rotative autour d'un axe de revolver orienté transversalement à l'axe de rotation et portant des outils, tourelle qui est agencée en décalage par rapport à l'axe de rotation de l'axe tournant (B) sur le second porte-outil (62).

2. Machine-outil selon la revendication 1, **caractérisée en ce que** la tourelle de revolver (62A) comprend une pluralité de logements (62d) pour recevoir des outils ou des porte-outils (62a, 62b, 62c) portant des outils, les logements étant conçus pour recevoir des porte-outils radiaux (62b) qui portent les outils radialement par rapport à l'axe de revolver, et pour recevoir des porte-outils axiaux (62a) qui portent des outils axialement par rapport à l'axe de revolver.

3. Machine-outil selon la revendication 2, **caractérisée en ce que** le second porte-outil (62) est conçu pour orienter un logement (62d) de la tourelle de revolver (62A) par rotation de la tourelle de revolver (62A) autour de l'axe de revolver sur une pièce à oeuvrer reçue dans l'une des broches de travail,
dans laquelle les logements sont agencés par paire sur des côtés opposés par rapport à l'axe de revolver sur la tourelle de revolver (62A) de telle sorte qu'un logement respectif est susceptible d'être orienté avec la seconde broche de travail (22) par orientation d'un autre logement opposé avec la première broche de travail (21), lorsque l'axe de revolver est orienté transversalement ou perpendiculairement aux axes des broches.

4. Machine-outil selon l'une des revendications précédentes, **caractérisée en ce que** le second chariot porte-outil (52a, 52b, 52c) comprend un axe linéaire (52c, 10) au moyen duquel le second porte-outil (62) est en outre mobile dans une troisième direction (Y2) transversalement ou perpendiculairement aux axes des première et seconde broches (21, 22) et transversalement ou perpendiculairement a la seconde direction (X2).

5. Machine-outil selon la revendication 4, **caractérisée en ce que** l'axe linéaire (52c, 10) du second chariot porte-outil (52) comprend un fourreau (10) rétractable et déployable qui est monté mobile dans une portion porte-fourreau (52c) du second chariot porte-outil (52a, 52b, 52c),
dans laquelle le fourreau (10) est en outre monté mobile en rotation dans la portion porte-fourreau (52c) du second chariot porte-outil (52a, 52b, 52c) et forme l'axe tournant B du second porte-outil (62).

6. Machine-outil selon l'une des revendications précédentes, **caractérisée en ce que** le premier chariot porte-broche (42) est agencé sur le premier côté de support (TS1), et des guidages (71a) orientés parallèlement aux axes des broches sont agencés sur le premier de support (TS1) de la portion de support centrale (1c) et de la seconde portion de support (1b), sur lesquels le second chariot porte-outil (52a, 52b, 52c) et le premier chariot porte-broche (42) sont guidés mobiles en direction (Z2, W) parallèlement aux axes des broches.

7. Machine-outil selon la revendication 6, **caractérisée par**
un troisième chariot porte-outil (53a, 53b, 53c) agencé sur le second côté de support (TS2) de la seconde portion de support (1b), sur lequel est agencé un troisième porte-outil (63) pour des outils destinés à usiner la seconde pièce à oeuvrer (W2),
le premier chariot porte-outil (51a, 51b, 51c) et le troisième chariot porte-outil (53a, 53b, 53c) étant mobiles en direction (Z1, Z3) parallèlement aux axes des broches.

8. Machine-outil selon la revendication 7, **caractérisée en ce que** des guidages (72a) orientés en direction (Z1, Z3) parallèlement aux axes des broches sont agencés sur le second côté de support (TS2), qui s'étendent depuis la première portion de support (1a) jusqu'à la seconde portion de support (1b) en passant par la portion de support centrale (1c), et sur lesquels le premier chariot porte-outil (51 a, 51b, 51c) et le troisième chariot porte-outil (53a, 53b, 53c) sont guidés mobiles en direction (Z1, Z3) parallèlement aux axes des broches.

9. Machine-outil selon l'une des revendications 1 à 5, caractérisée le premier chariot porte-broche (42a, 42b) est agencé sur le second côté de support (TS2), et des guidages (72a) orientés en direction (Z1, W) parallèlement aux axes des broches sont agencés sur le second côté de support (TS2), qui s'étendent depuis la première portion de support (1a) jusqu'à la seconde portion de support (1b) en passant par la portion de support centrale (1 c), et sur lesquels le premier chariot porte-outil (51a, 51b, 51c) et le premier chariot porte-broche (42) sont guidés mobiles en direction (Z1, W) parallèlement aux axes des broches.

10. Machine-outil selon la revendication 9, **caractérisée en ce que** le premier chariot porte-broche est réalisé sous forme de chariot en croix et comprend un premier chariot partiel porte-broche (42a) mobile en direction (W) parallèlement aux axes des broches, et un second chariot partiel porte-broche (42b) qui est agencé sur le premier chariot partiel porte-broche (42a) de façon mobile en direction (X_{GSP}) transversalement ou perpendiculairement aux axes des broches.

11. Machine-outil selon l'une des revendications précédentes, **caractérisée en ce que** le premier chariot porte-outil (51a, 51b, 51c) et/ou un troisième chariot porte-outil (53a, 53b, 53c) agencé sur le second côté de support (TS2) sont réalisés sous forme de chariot double en croix (51a, 51b, 51 c ; 53a, 53b, 53c), et un premier chariot partiel (51a ; 53a) est agencé mobile en direction (Z1 ; Z3) parallèlement aux axes des broches, un second chariot partiel (51b ; 53b) est agencé mobile en direction (Y1 ; Y3) transversalement ou perpendiculairement aux axes des broches, et un troisième chariot partiel (51c ; 53c) est agencé mobile en direction (X1 ; X3) transversalement ou perpendiculairement aux axes des broches et transversalement à la direction de déplacement (Y1 ; Y3) du second chariot partiel (51b ; 53b).

12. Machine-outil selon l'une des revendications précédentes, **caractérisée en ce que** le premier côté de support (TS1) définit un premier plan et le second côté de support (TS2) définit un second plan, le premier plan étant orienté parallèlement ou perpendiculairement au second plan ; ou
le premier côté de support (TS1) définit un premier plan et le second côté de support (TS2) définit un second plan, le premier plan étant orienté en oblique par rapport au second plan.

13. Machine-outil selon la revendication 11, **caractérisée en ce que** le premier côté de support (TS1) définit un premier plan et le second côté de support (TS2) définit un second plan, le premier plan étant orienté en oblique par rapport au second plan,
dans laquelle un premier côté du second chariot partiel (51b ; 53b) qui est tourné vers le premier chariot partiel (51a ; 53a) sur le second côté de support (TS2) définit un cinquième plan qui est orienté parallèlement au second plan, et un second côté du second chariot partiel (51 b ; 53b) tourné vers le troisième chariot partiel (51 c ; 53c) définit un sixième plan qui est orienté parallèlement au premier plan, le second chariot partiel (51 b ; 53b) étant réalisé sous forme de chariot en coin de telle sorte que le troisième chariot partiel (51c ; 53c) est agencé mobile parallèlement au premier plan sur le second chariot partiel (51 b ; 53b).

14. Machine-outil selon la revendication 12 ou 13, **caractérisée en ce que** l'axe de rotation de l'axe tournant (B) est orienté sensiblement perpendiculairement au premier plan.
